# EUROPEAN PATENT SPECIFICATION

(11) **EP 4 558 329 B1**
(45) Date of publication and mention of the grant of the patent: **12.08.2026**
(21) Application number: 23748452.2
(22) Date of filing: 19.07.2023
(51) Int. Cl.: B29C 65/36, B29C 65/00, H05B 6/06, H05B 6/10, H05B 6/36, H05B 6/40, H05B 6/42, H05B 6/44

(54) **INDUCTIVE WELDING OF WORKPIECES**
INDUKTIVES SCHWEISSEN VON WERKSTÜCKEN
SOUDAGE PAR INDUCTION DE PIÈCES

(30) Priority: 20.07.2022 SE 2250924
(43) Date of publication of application: 28.05.2025
(73) Proprietor: Corebon AB, 213 76 Malmö (SE)
(72) Inventor: FROGNER, Kenneth, 242 92 Hörby (SE); LEVIN, Allen, 413 25 Göteborg (SE)
(74) Representative: Ström & Gulliksson AB
(86) International application number: PCT/EP2023/070058
(87) International publication number: WO 2024/017960

(56) References cited:
- EP-A1- 3 967 437
- EP-A1- 3 995 295
- US-A- 5 313 037
- US-A1- 2009 134 148

## Description

### FIELD OF THE INVENTION

The present invention relates to an inductor unit for controlled induction welding of at least one fiber reinforced thermoplastic composite workpiece. The invention also relates to a system for induction welding and a method of providing such a system.

### BACKGROUND

Over the past years, there has been an increasing interest in the use of lightweight materials in for instance the automotive and aerospace industry, where the main goal has been to reduce carbon emissions during transportation. For instance, it has been increasingly common that the vehicle or aircraft components are made of fiber composites. An emerging swap from thermoset resins to thermoplastic matrices allow the parts to be welded together, for example through induction welding.

There are several systems available on the market which are directed at the induction welding of such materials. A drawback with these systems is that they often use coils with single or few turn copper tubes which require high current levels of about 300-1000 A, significant cooling and where the efficiency is low, or that they use processed or 3d printed copper structures with high losses and current levels. Other systems use litz wires which can be efficient, but often difficult to cool. A difficult challenge with induction welding is to achieve uniform temperature in the weld interface, without local hotspots or coldspots and without remelting undesired areas of the composite components, while at the same time applying a certain consolidation pressure on the heated area.

A drawback with prior art systems is that they require high current levels to provide sufficient heating, resulting in high losses and low efficiency. Typically, it also means that a bulky and heavy workhead, consisting of a transformer, resonance capacitors and copper busbars, needs to be located close by, which is not desirable to put at the end effector of a robotic arm. Other similar inductor examples exist, for example combined with rollers as described in EP2801472B1, or other devices to apply the consolidation pressure, since the inductor itself usually cannot withstand the pressure in a good way. A challenge with these designs is also to achieve a desired heating pattern. Other prior art systems are found in EP3995295, US5313037, EP3967437 and US2009134148. In particular, EP3995295 discloses an induction welding device suitable for the welding of fiber reinforced plastics, comprising a coil, and a soft magnetic element arranged at least partially in an electrical conductive element having an active side and a generative side with bigger cross sectional area than the active side.

Hence, there is a need for an improved induction welding device which can be used to better control the welding of fiber reinforced plastics while at the same time enhancing the weld quality and reducing the power used in the process.

### SUMMARY OF THE INVENTION

An object of the present invention is to solve or at least mitigate the problems related to prior art. This object is achieved by means of the technique set forth in the appended independent claims; preferred embodiments being defined in the related dependent claims.

According to an aspect of the invention, an inductor unit for controlled induction welding of at least one fiber reinforced thermoplastic composite workpiece is provided. The inductor unit comprises at least one coil unit; at least one electrically conductive element having a generative side and an active side, wherein the active side is configured to face the at least one workpiece to be welded, wherein the active side of the electrically conductive element has a smaller cross-sectional surface area than the generative side; and at least one soft magnetic element. The at least one coil unit is configured to induce currents in the electrically conductive element; and the at least one soft magnetic element is arranged at least partly on the at least one electrically conductive element such that the induced current is directed from the generative side to the active side of the electrically conductive element and concentrated therein.

An advantage of the inductor unit is that the coil unit requires a rather low current to achieve a high current density in the active side of the inductor unit facing the workpieces to be welded and thereby a high power density in the workpiece.

Another advantage of the inductor unit is that it requires less cooling. Hence, the need for external cooling systems is reduced.

Yet another advantage of the inductor unit is that it may be designed to accurately match the shape of the workpiece(s) to be welded. This applies also for complex geometries of workpieces. The inductor unit can withstand and be used to apply consolidation pressure on the weld seam area, either as a rigid construction or with a certain flexibility to adapt to the part geometry of the workpiece(s) to be welded. It can be used for continuous welding as well as for discrete welds, including spot welds. A common need of induction welding equipment is the flexibility to handle different geometries in a fast and cost-effective manner. The proposed inductor design can be easily and automatically adapted to handle for example wide and narrow welds, flat and curved geometries, varying weld lengths, etc.

Unlike copper tubing, there is a complete freedom of the geometry, thus less constraints in design optimization. The electrically conductive and soft magnetic elements also enable the guidance of the current in an optimal way to achieve the desired temperature pattern. Together with high power densities, as opposed to prior art, it enables shorter cycle times and limited heat affected zones.

Another advantage of the inductor unit is that it can be arranged to be in contact with or close to the workpiece(s) to be welded. This way, losses may be reduced and the efficiency improved.

The inductor unit can ensure focused heating where desired, reduce undesired heating of areas outside the weld seam area and cool the surface to prevent remelting of undesired areas. Moreover, the materials of the inductor unit can provide thermal loading or cooling of the weld zone, also referred to as a weld seam area, tailored by the design of the inductor unit, to facilitate not only the generation of a certain temperature pattern, but also the temperature profile, for enhanced material properties, such as matrix crystallinity.

Furthermore, together with a processing means, the high efficiency inductor unit may be useful to predict the temperature in the weld interface.

According to another aspect, a system for induction welding of at least one fiber reinforced thermoplastic composite workpiece comprising the inductor unit according to the above is provided.

According to yet another aspect, a method of providing a system for induction welding of at least one fiber reinforced thermoplastic composite workpiece according to the above is provided.

### BRIEF DESCRIPTION OF THE DRAWINGS

By way of example, embodiments of the present invention will now be described with reference to the accompanying drawings, in which:
Fig. 1 is a perspective view of a part of an induction welding system according to an embodiment,
Fig. 2 is a schematic block diagram of a part of the system of Fig. 1,
Fig. 3a is a perspective view of an inductor unit according to an embodiment,
Fig. 3b is a cross-section view of the embodiment of Fig. 3a,
Fig. 3c is a perspective view of a part of an inductor unit according to another embodiment,
Fig. 3d is a cross-section view of the embodiment of Fig. 3c,
Fig. 3e is a perspective view of a part of the inductor unit of Figs. 3c and 3d,
Fig. 3f is a perspective view of a part of an inductor unit according to yet an embodiment,
Fig. 3g is a cross-section view of the inductor unit of Fig. 3f,
Fig. 3h is a perspective view of an inductor unit according to another embodiment,
Fig. 3i is another perspective view of the inductor unit of Fig. 3h,
Fig. 3j is a cross-section view of the inductor unit of Fig. 3i,
Fig. 3k is a perspective view of an inductor unit according to an embodiment,
Fig. 4a is a perspective view of a generative side of a part of an inductor unit according to another embodiment,
Fig. 4b is a perspective view of an active side of a part of the inductor unit of Fig. 4a,
Fig. 4c is a schematic top view of the inductor unit of Figs. 4a-b,
Fig. 4d is a perspective view of an active side of an inductor according to Figs. 4a-b,
Fig. 4e is a cross-section view of the embodiment of Fig. 4d,
Fig. 5a is a perspective view of half an inductor unit according to yet an embodiment,
Fig. 5b is a perspective view of a part of the inductor unit of Fig. 5a,
Fig. 5c is a cross-section view of the inductor unit of two times the inductor unit shown in Fig. 5a,
Fig. 6a is a perspective view of a part of an inductor unit according to another embodiment,
Fig. 6b is a perspective view of a part of another type of inductor unit according to the embodiment shown in Fig. 6a,
Fig. 6c is a cross-section view of an inductor unit according to an embodiment,
Fig. 6d is a cross-section view of an inductor unit according to another embodiment,
Fig. 6e is a cross-section view of an inductor unit according to yet another embodiment,
Fig. 7a is a perspective view of an inductor unit according to another embodiment,
Fig. 7b is a cross-section view of the embodiment of Fig. 7a,
Fig. 8 is a schematic block diagram showing a system for induction welding, and
Fig. 9 is a schematic block diagram of a method of welding according to an embodiment.

### DETAILED DESCRIPTION OF EMBODIMENTS

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

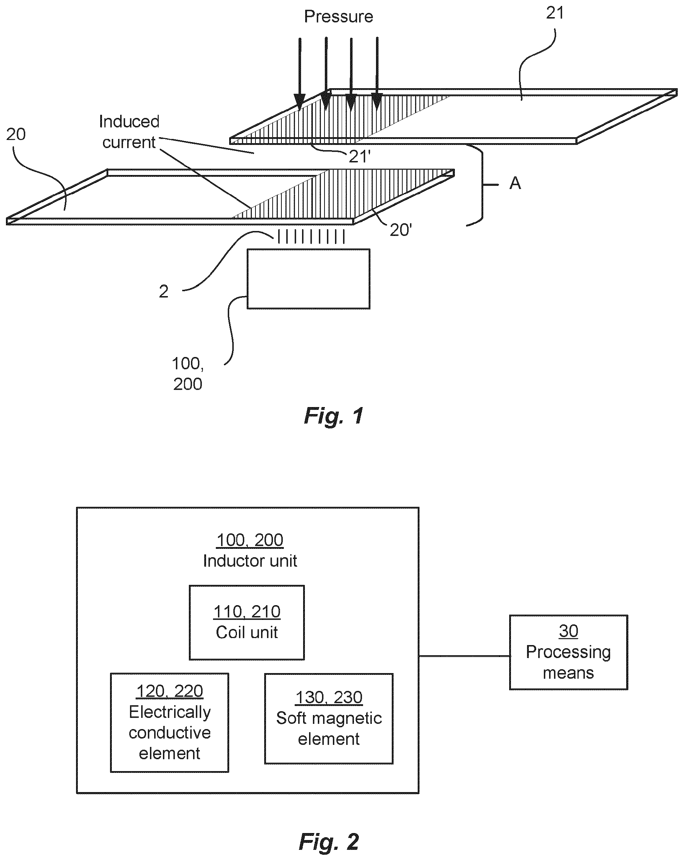

Fig. 1 illustrates a part of a system 1 for induction welding according to the invention, where an object is to achieve a process temperature sufficient to weld at least one workpiece 20, 21 without overheating or underheating the material(s), or workpiece(s), to be welded. The inductive power 2 is caused by the inductor unit 100, 200 that induces a current into the at least one workpiece 20, 21.

A pressure is applied to the at least one workpiece(s), 20, 21, to ensure proper consolidation. The pressure can be applied either through the inductor unit onto the workpiece(s) or by other means, such as a vacuum bag or an external fixture.

Before turning to a detailed description of the disclosed embodiments of the inductor unit 100, 200, an exemplifying environment in which it may be exercised will now be briefly described.

Referring to Fig. 1, two surfaces of two workpieces 20, 21 are to be welded to each other. The workpieces 20, 21 are configured to be inductively welded in a weld seam area A. The weld seam area A is defined by a first portion 20' of the first workpiece 20 arranged on or adjacent to, and facing, a second portion 21' of the second workpiece 21. The inductor unit 100, 200 is arranged in conjunction with, or close to, at least one of the two workpieces 20, 21. In one embodiment, the two workpieces 20, 21 are arranged in conjunction with the inductor unit by being in direct contact with each other. In yet one embodiment, the two workpieces 20, 21 are arranged in conjunction with the inductor unit 100, 200 without being in direct contact with each other. Hence, the at least one workpiece 20, 21 may be in direct contact or in indirect contact with the inductor unit 100, 200, or not in physical contact with each other. The distance between the inductor unit 100, 200 and the workpiece(s) is preferably less than 5 mm to have a good electromagnetic coupling, but may be as much as between 10 to 15 mm for wide weld zones.

For example, a thermally conductive or insulating material may be placed between the inductor unit 100, 200 and the at least one workpiece to control the heat transfer, creating an indirect contact. In one embodiment the inductor unit 100, 200 is at a predetermined distance from the at least one workpiece 20, 21, and consolidation pressure is obtainable by other means. The smaller the distance, the better the electromagnetic coupling. Preferably, the distance is less than 5 mm, but may be as much as 10-15 mm. For instance, a consolidation pressure is maintained also after finished heating by a mechanical clamping outside of the weld seam area A.

The inductor unit 100, 200 induces a current in at least one of the workpieces 20, 21 which are susceptive to electromagnetic heating. Alternatively, there is an embedded susceptor in the workpieces, or in close proximity to them, typically close to the weld seem area A. The workpiece(s) 20, 21 are inductively heated so that material in the weld seam area A is melted or fused together when it reaches a predetermined melting or processing temperature corresponding to the material properties of the workpieces 20, 21. The time required for melting the workpieces 20, 21 at the weld seam area A is determined by the material properties and geometry of the respective workpiece(s).

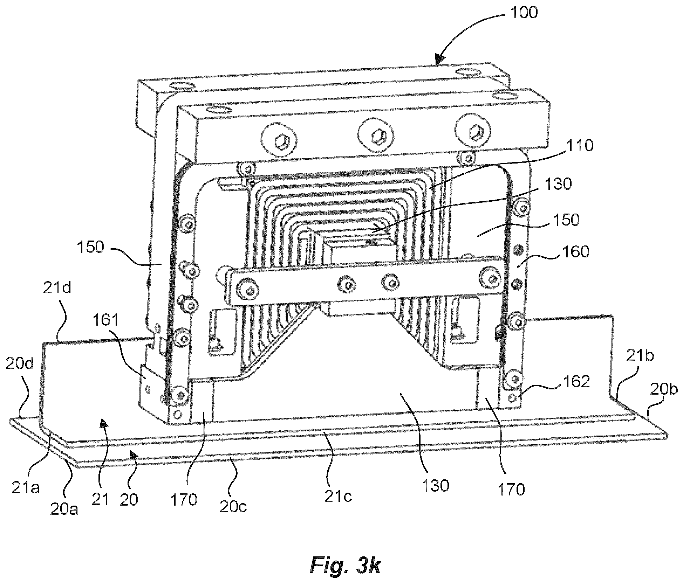

In the embodiment shown in Fig. 1, the workpieces 20, 21 are rectangularly shaped. However, as should be understood by a person skilled in the art, they may have any shape. For instance, they may be a beam and skin of an aircraft component. The workpieces 20, 21 may also be fixturing elements to be attached to an automotive component, or two similar parts to be joined, see for instance Fig. 3k. The workpiece(s) to be welded may have complex geometries, and their thickness may vary from sub millimeter to tenths of millimeters.

The workpieces 20, 21 are to be regarded as susceptors meaning that they have the ability to absorb electromagnetic energy and convert it to heat. Typically, they are carbon fiber composite materials such as carbon fiber reinforced plastics (CFRP). The fiber reinforcement can be any type of technical fiber such as glass fibers, flax, aramid, PET, ultra high molecular weight polyethylene (UHMWPE). The composite can also be a hybrid fiber reinforced material, containing more than one fiber type, e.g. glass and carbon fiber. The fibers can be continuous or chopped, unidirectional, multi-axial or woven layups or randomly oriented fibers. Different types of fibers and layups have their particular advantages, such as stiffness, density, cost, appearance, environmental impact, dielectric properties etc.. A susceptor material can be any electrically conductive or magnetic permeable material, for example carbon fibers and any type of metals. For example, a steel mesh is sometimes added to be able to weld non-electrically conductive fiber composites, as will be clear from the description below.

The workpieces 20, 21 may for instance be made from unidirectional laminates where each layer is arranged with a different angle with respect to adjacent layers. As a non-limiting example, each workpiece may contain e.g. 10 layers of carbon fibers embedded in a thermoplastic matrix. Alternatively, the workpieces 20, 21 are made of a woven web of carbon fibers, such as chopped or grinded, organized or randomly oriented carbon fibers. The matrix may be amorphous or semicrystalline thermoplastic materials, for example polyethylene terephthalate (PET), polypropylene (PP), polyamide (PA), polycarbonate (PC) or high-end types such as polyphenylene sulfide (PPS), polyetherimide (PEI) or polyetereterketone (PEEK) etc. Carbon fiber composites are usually classified as semiconductors and can be directly heated throughout the material thickness. Due to the thermoplastic matrix, it is possible to melt the workpieces 20, 21 and thereby create a weld seam in the weld seam area A shared by the two workpieces 20, 21.

The workpieces 20, 21 may also be fiberglass composite materials. The fibers can also be of any other technical textile, such as flax fibers, aramid, ultra-high molecular weight polyethylene, etc. As a non-limiting example, glass fibers may be used as a reinforcement agent in a polypropylene based matrix. If the workpieces 20, 21 to be welded are fiberglass composites, one may need to introduce an additional layer (not shown) in an interface between the two workpieces 20, 21. This is due to the lack of electrical conductivity and magnetic permeability of fiberglass. The additional layer placed in the interface may also be called a susceptor. This susceptor may be for instance a woven web of metal or carbon fiber. The webs constituting the additional layer may also be nonwoven. It may be that the additional layer is something else than a web. For instance, the additional layer may be randomly oriented carbon fibers applied to the surface of one or both of the workpieces 20, 21 to be welded.

It should be noted that the two workpieces 20, 21 may be of different material. Hence, the first workpiece 20 may be of a first material and the second workpiece 21 may be of a second material. In the embodiment described above, one workpiece may be made of a fiberglass composite material and one workpiece is a susceptor. The composite materials can also be built by hybrid fiber reinforcement, for example glass fiber and carbon fiber, typically with the carbon fiber at least at the surface or close to the surface of the material. A workpiece can also be welded to a thermoplastic part or a metal component, for example a fixturing element.

In the examples described above, welding has been described as welding of two surfaces of two separate workpieces. However, as should be understood by a person skilled in the art, two surfaces of one single workpiece could also be welded together. Put differently, the two workpieces may belong to the same part, for example in the case with a closed section component such as an open tube that is welded together along its length.

The workpieces 20, 21 may also include non-consolidated material, such as weaves based on co-mingled or spun carbon and thermoplastic fibers, organosheets, other types of semi-finished or pre-consolidated carbon fiber thermoplastic pre-pregs, or it may be technical fibers with a thermoplastic or heat activated binder. Typically, in these cases the welding is used to keep the layers in place during layup, before being placed in a mold and consolidated, sometimes referred to as pre-forming. Moreover, it should be understood that in certain cases, even surfaces of three or more different workpieces or more can be welded together. Other combinations of materials may be a reinforcement material welded to a core material, for example a metal or carbon fiber sheet welded to a foamed PET material, commonly used in lightweight constructions to increase the stiffness, often called sandwich constructions. In another example, a thermoplastic composite panel can be welded to a metal frame for fast attachment.

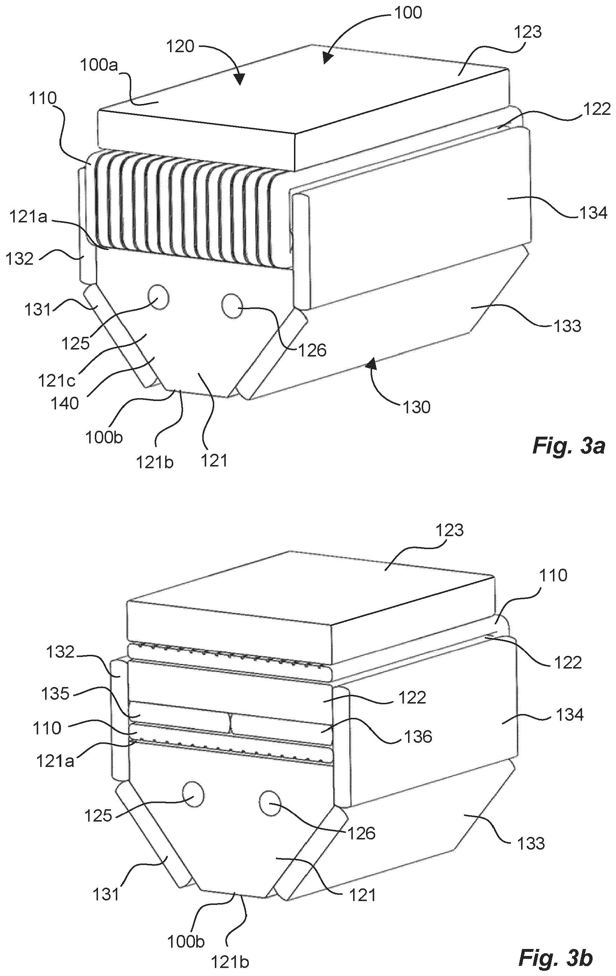

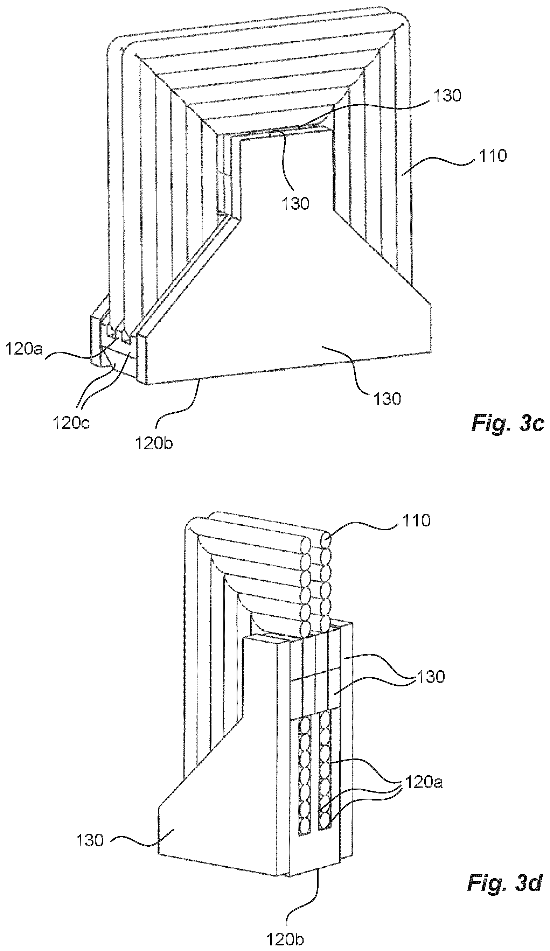

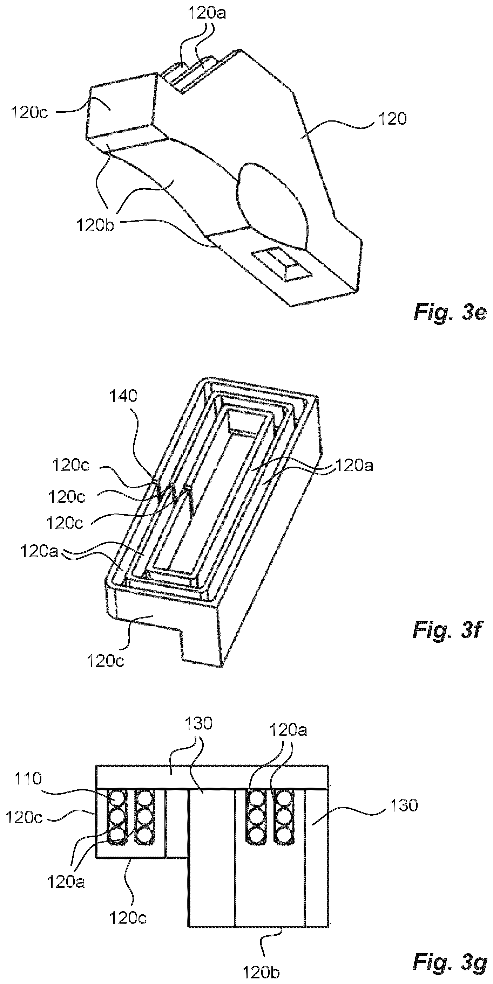

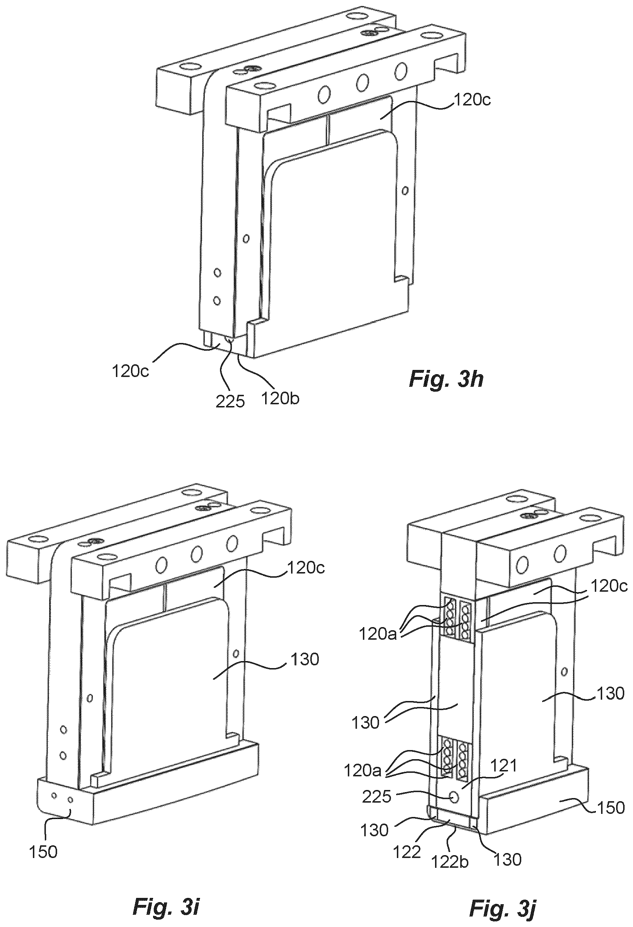

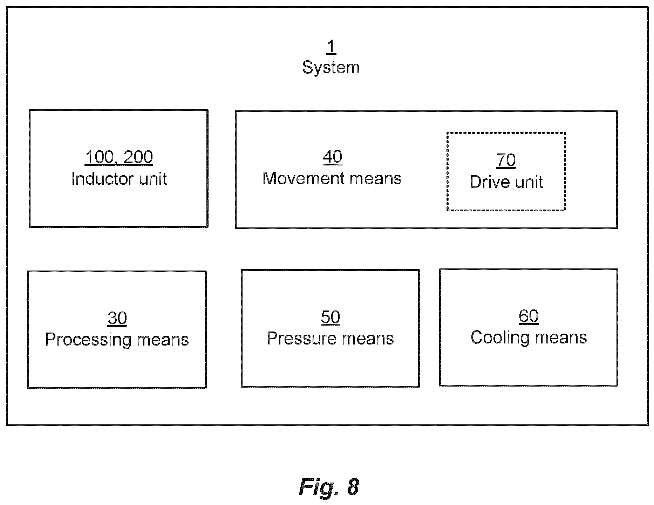

Turning back to Fig. 1, a pressure is applied to the workpieces 20, 21 to ensure good contact between the two workpieces to be joined. The pressure may be applied through external pressure means 50 (see Fig. 8), or by forces resulting from the inherent characteristics of the inductor design, such as through geometrical expansion, which will be understood in relation to Figs. 3-6 below. In general, the pressure means 50 can be applied from either side of the workpiece(s) to be welded together, relative to the inductor unit 100, 200, preferably with a fixturing device (not shown) on the opposite side. The inductor unit, pressure means and fixture may be either fixed or movable depending on the setup and application. Consolidation pressure may come from any type of force generation, such as a spring loading, a press unit, robotic device or expanding part or material. Consolidation pressure may alternatively come from a vacuum bag/membrane, or similar, covering the workpieces, by atmospheric or elevated pressure. For example, an autoclave or water basin may be used to apply the consolidation pressure, and in the case with water or other fluid, it also provides cooling of the workpiece(s) 20, 21.

In Fig. 2, a schematic representation of an inductor unit 100, 200 is shown. Some reference numbers appear in the description of Fig. 2 which are not explicitly shown in Fig. 2. These features will become clear when read in connection with the remaining drawings. The inductor unit 100, 200 comprises a coil unit 110, electrically conductive element(s) 120, 220, and soft magnetic element(s) 130, 230. Furthermore, the inductor unit 100, 200 is preferably in operative communication with a processing means 30. The different parts will now be described in more detail.

The inductor unit 100, 200 has a generative side 100a, 200a and an active side 100b, 200b (see Figs. 3-7). Both the generative side 100a, 200a and the active side 100b, 200b comprise, or form part of, an electrically conductive element 120, 220. The generative side 100a, 200a of the inductor unit 100, 200 may correspond with a generative side 120a, 220a of the electrically conductive element 120, 220. Correspondingly, the active side 100b, 200b of the inductor unit 100, 200 may correspond with an active side 120b, 220b of the electrically conductive element 120, 200.

In the active side 100b, 200b of the inductor unit 100, 200, the electrically conductive element 120, 220 preferably has a smaller cross-sectional surface area than the generative side 100a, 200a of the inductor unit 100, 200. The cross-sectional surface area relates to an area for the current to pass through.

The cross-sectional surface area may be defined by the width of where the current can flow, times the skin depth. Since the skin depth can be assumed to be the same everywhere on the electrically conductive element (valid if the electrically conductive element is made by the same material everywhere, for example copper), it is the same as the cross-sectional width of the surface where the current can flow. Hence, at least parts of the active side 120b, 220b may have a narrower surface width than the generative side 120a, 220a. In other words, the cross-sectional surface area may also be referred to as a cross-sectional surface width.

The electrically conductive element 120, 220, or at least parts of it may be exchangeable. It may have a curved or bent shape on the generative side 100a, 200a, thereby increasing the cross-sectional surface area on the generative side 100a, 200a as compared to the surface area on the active side 100b, 200b. Conversely, the electrically conductive element 120, 220 may have a narrower shape towards the active side 100b, 200b of the inductor unit to create a smaller cross-section for the current and thereby a more concentrated electromagnetic flux density and power density. Moreover, the electrically conductive element 120, 220 may be deformable, such as by pressurized media. For example, if the electrically conductive element 120, 220 is at least partially hollow, and the wall thickness on the active side 120b, 220b of the electrically conductive element 120, 220 is small, it will deform if the hollow volume is expanding, and thereby apply a pressure on the workpiece(s). This actuation is achieved if the hollow volume is pressurized, for example by air or water.

As briefly mentioned, the electrically conductive element 120, 220 has a generative side 120a, 220a and an active side 120b, 220b. The active side 120b, 220b is configured to face the at least one workpiece 20, 21 to be welded, and has, at least locally, a smaller cross-sectional surface area than the generative side 120a, 220a. If the active side 120b, 220b of the electrically conductive element has a varying width, the largest power density would be generated in the narrow section, with the highest current density. Exemplified with the shape of a sandglass, given the distance between the active side 120b, 220b of the electrically conductive element and the workpieces 20, 21 is the same everywhere, the center part (where the current is concentrated) would be the warmest.

The cross-sectional surface area of the active side 100b, 200b may be described as the area of the inductor unit 100, 200 facing the workpiece(s) to be welded, and the cross-sectional surface area of the generative side 100a, 200a may be described as the area of the inductor unit 100, 200 facing away from the workpiece(s) to be welded.

A part of the electrically conductive element 120, 220 linking the generative 120a, 121a, 220a and the active 120b, 121b, 220b sides together is referred to as a transfer part 120c, 121c, 220c, 221c, 222c. The transfer part is also referred to as a transfer side in the following. The transfer side(s) 120c, 121c, 220c, 221c, 222c may have virtually any shape. In certain inductor designs, the transfer sides may be negligible in size. Preferably, the transfer sides are not covered by soft magnetic elements 130, 230.

The coil unit 110 may comprise one or more coils, together forming at least two turns, preferably more. The turns may be wound at least partially around the generative side 120a, 121a, 220a of the electrically conductive element 120, 220 and/or the at least one soft magnetic element 130, 230. Each coil is preferably made of litz wire of low loss. The litz wire comprises a plurality of individual strands. The strands are typically of thin insulated wire arranged together. In one embodiment, the strands are twisted together in parallel. In one alternative embodiment, the strands are twisted together as a single bunch. In yet one embodiment, multiple bunches of strands are twisted together.

Litz wires are used to reduce the skin effect. The skin effect is a term given to the phenomenon of when high frequency currents tend to flow near the surface (or skin) of an electrical conductor. This occurs due to magnetic fields being induced in the conductor by the high frequency alternating currents. The magnetic fields make it difficult for the currents to flow anywhere but the outer surface. As the currents are being forced to flow in just part of the conducting wire, the effective resistance of the wire is greater. The higher the frequency, the more loss in the wire due to this increased effective resistance. The winding patterns of a litz wire equalizes the proportion of the overall length over which each strand is at the outside of the conductor. This has the effect of distributing the current equally among the wire strands, thereby reducing the resistance. In the same way, the litz wire also reduces the proximity effect, which forces the current to concentrate in certain areas of a regular wire due to the currents in neighboring wires or conductors.

The electrically conductive element 120, 220 is made of a highly electrically conductive material. The material may for example be copper or aluminum. An advantage of using copper is the superior thermal and electrical conductivity, among the commonly used metals. An advantage of using aluminum is, except for the good electrical conductivity, the easiness of applying a high temperature resistant electrical insulation in terms of aluminum oxide through anodization, allowing the inductor to be in direct contact with the workpiece surface if desirable, without having direct electrical contact. Electrical contact between the electrically conductive element 120, 220 and the workpiece 20, 21 may not be a problem from a functional point of view due to the big difference in electrical resistivity between the different materials, but it can cause undesired arcing. Direct electrical contact between the electrically conductive element 120, 220 and the workpiece(s) 20, 21 may also provide enhanced welding results as will be described further below, with reference to Fig. 3k. The electrically conductive element 120, 220 might comprise a plurality of parts, as will be described more in detail with reference to Figs. 3-7. Furthermore, the inductor unit 100, 200 may also include an electrical and/or thermal insulation (not shown) between the electrically conductive element 120, 220 and the at least one workpiece 20, 21 to be welded.

As mentioned, the inductor unit 100, 200 further comprises a soft magnetic element 130, 230. The soft magnetic element 130, 230 is made of a soft magnetic material of any sort, with a relative magnetic permeability of more than 10. A soft magnetic material should preferably also have high bulk electrical resistivity, many thousand or even million times higher than the electrically conductive element. The bulk electrical resistivity is defined as the global electrical resistivity in the directions in which induced currents can flow, rather than the properties on the micro level. A bulk resistivity of at least 0.01 Ohm*m is preferred in the soft magnetic material.

The soft magnetic material 130, 230, also referred to as a flux concentrating element, may be a composite or a ceramic, preferably with low magnetic hysteresis losses. It may be any one of a soft magnetic ferrite, and/or a powder-based core, soft magnetic composites of bundles or stacks of individually insulated soft magnetic wires, strips or laminates, including amorphous and semi-crystalline alloys. Preferably, the soft magnetic element 130, 230 is arranged at least partially on a boundary surface of the inductor unit 100, 200. More specifically, the soft magnetic element 130, 230 is preferably arranged at least partially on a surface of the electrically conductive element 120, 220. This is to enhance the magnetic flux and to prevent currents from being conducted on the areas of the conductive element covered by the soft magnetic element. The soft magnetic element 130, 230 arranged on the electrically conductive element 120, 220 preferably faces the environment rather than the workpiece(s). The boundary surface of the inductor unit may be described as the outer surface of the inductor unit facing the environment.

A purpose of arranging the soft magnetic element on top of the electrically conductive element is to direct the current induced by the coil unit 110, 210 from the generative side 120a, 220a to the active side 120b, 220b of the electrically conductive element 120, 220 and to concentrate the current therein. Moreover, the soft magnetic element 130, 230 is provided to enhance the magnetic flux and to prevent currents from being conducted on the areas of the electrically conductive element 120, 220 covered by the soft magnetic element 130, 230. The soft magnetic element 130, 230 may also be arranged within the inductor unit 100, 200 with the purpose of concentrating and enhancing magnetic flux in the desired regions of the inductor unit, as will be clear from the description below. Also, the soft magnetic element 130, 230 is configured to concentrate the induced current in the active side 100b, 200b of the inductor unit 100, 200 to heat the predetermined weld seam area A in the at least one workpiece 20, 21.

In one embodiment, the soft magnetic element 130, 230 is made of soft ferrite. In one alternative embodiment the soft magnetic element 130, 230 comprises a powder-based core of flux material or other similar type of soft magnetic composite. In yet one embodiment, the soft magnetic element 130, 230 comprises a laminated soft magnetic structure. In general terms, the soft magnetic element 130, 230 is configured to concentrate the electromagnetic flux and thereby help guide the current in a desired direction. It may be seen as a shield, which helps in concentrating electric currents.

The soft magnetic element 130, 230 might comprise a plurality of parts, as will be described more in detail with reference to Figs. 3-7. Preferably, the soft magnetic element 130, 230 surrounds at least a part of the electrically conductive element 120, 220. The soft magnetic element 130, 230 is configured to act as a conductor for magnetic fields but not electrical currents.

The soft magnetic element 130, 230 may contribute to the concentration of current in predetermined parts of the inductor unit 100, 200 by providing a path for the magnetic flux. The induced current in the electrically conductive element 120, 220 of the inductor unit 100, 200 is enhanced by the flux concentration and in particular the current in the active side 100b, 200b of the electrically conductive element. This principle may be explained as follows.

The induced current in the electrically conductive element 120, 220 aims to minimize the stored energy of the circuit, i.e. the inductance of the circuit. Thus, the current prefers to flow on surfaces which are not covered by soft magnetic material 130, 230, such as the transfer sides 120c, 121c, 220c, 221c, 222c, and avoids areas covered or delimited by soft magnetic materials 130, 230. The direction of the induced currents is defined by the coil unit 110, 210. The current is also forced to create closed current loops according to the laws of physics. When the electrically conductive element 120, 220 is in contact with the at least one workpiece 20, 21 during welding, it forms a closed current loop for current flowing from one area of the at least one workpiece 20, 21 to another.

In some embodiments, the electrically conductive element 120, 220 may be formed with a surface area which tapers in a direction configured to be facing the workpieces 20, 21 to be welded. Alternatively, or additionally, the electrically conductive element 120, 220 may have a recess, such as a slit, extending radially outwards from a centre axis of the inductor unit 100, 20, in a direction configured to be facing the workpieces 20, 21 to be welded. In either one of these two cases, or alternative configurations, a current induced in the inductor unit via the coil unit 110, 210 may be channeled through the inductor unit 100, 200, in a direction towards the workpieces 20, 21 to be welded. The presence of the soft magnetic element 130, 230 enhances this current density formation in accordance with the principle previously described.

As mentioned, with reference to Fig. 2, the inductor unit 100, 200 is in operative communication with a processing means 30, such as a frequency converter. The processing means 30 is configured to generate a high frequency current in the coil unit 110, 210. The system 1 shown in Fig. 8 comprising the inductor unit 100, 200 further includes the processing means 30.

Preferably, the processing means 30 is or comprises a frequency converter. The processing means 30 is configured to generate an electromagnetic field, through the inductor unit 100, 200, by applying an alternating current to the inductor unit 100, 200 so as to inductively heat the workpiece(s) 20, 21 at the weld seam area A, so that the workpieces 20, 21 are welded together.

The processing means 30 may further comprise an interface (not shown) for transmitting data obtained by inductor. The interface may be of any suitable type, including simple wiring, a serial interface such as Ethernet, RS485, USB, a wireless interface such as Bluetooth or WiFi, etc. The processing means 30 may comprise a programmable device, such as a microcontroller, central processing unit (CPU), digital signal processor (DSP) or field-programmable gate array (FPGA), discrete digital synthesizer (DDS) with appropriate software and/or firmware, and/or dedicated hardware such as an application-specific integrated circuit (ASIC). The processing means can be connected to or comprises a computer readable storage medium such as a disk or memory. The memory may be implemented using any commonly known technology for computer-readable memories such as ROM, RAM, SRAM, DRAM, FLASH, DDR, SDRAM or some other memory technology.

The processing means 30 may further comprise a display unit to provide an operator or user with process information. The processing means will be described further with reference to Fig. 8.

An advantage of the inventive inductor unit 100, 200 which is common for all embodiments is that it can be driven with a low current due to the multi-turn structure of the coil unit 110, 210. By integrating the coil unit 110, 210, the electrically conductive element 120, 220 and the soft magnetic material 130, 230 as one unit, a relatively high power density may be achieved at the part of the workipece(s) to be inductively welded.

Compared to a traditional coil and workhead, the inductor unit 100, 200 is a compact, lightweight unit that can easily be mounted as the end effector of any type of robot. It can also handle a long, flexible wire between the processing means and the inductor unit 100, with stable operation, without substantial losses, and without EMC interference.

As mentioned, the inductor unit 100, 200 is configured to be arranged close to the workpieces 20, 21 to be welded, as well as to induce and guide the heating current to a specific location on/around the workpieces 20, 21. The inductor unit 100, 200 may be in direct contact or indirect contact with the workpieces 20, 21 to be welded, depending on the thermal design, material selection and application. The inductor unit 100, 200 may contain a thermally insulating material covering the active side of the electrically conductive element, preventing too much heat from being transferred into the inductor unit 110, 200. With a certain fixturing arrangement, the inductor unit 100, 200 does not necessarily need to be in contact with the workpieces, but consolidation pressure may be obtained by other means, which is particularly useful in the case of continuous welding.

The inductor unit 100, 200 may be designed to have different shapes as will now be shown and discussed with reference to Figs. 3-7. Hence, the inductor unit 100, 200 is adaptable to different workpiece configurations and enables selective and welldefined heating of the workpieces to be welded. Non-exhaustive examples of inductor configurations are shown in the appended drawings. It should be noted that there are other embodiments that are not captured by the drawings.

The movement of the inductor unit 100, 200 could be in multiple directions in a single embodiment, as long as the inductor unit 100, 200 is close to the at least one workpiece 20, 21. Preferably, the translational movement of the inductor is actuated by a movement means (not shown). This will be further discussed in relation to Fig. 8. The inductor unit 100, 200, depending on its design and usage, may be applied for spot welding, static line welding, piecewise static line welds or continuous or dynamic welding along a programmed trajectory.

With reference to Fig. 3a, an inductor unit 100 according to a first embodiment is shown. The inductor unit 100 in Fig. 3a may also be referred to as a longitudinal flux inductor 100. In this embodiment, the inductor unit 100 has a longitudinally extending shape. The inductor unit 100 has a generative side 100a and an active side 100b, and comprises three major components; a coil unit 110, an electrically conductive element 120, and a soft magnetic element 130. This schematic illustration of the inductor unit illustrates the inventive concept in a pedagogic way and may serve as reference for other embodiments described below.

As shown in Fig. 3a, the coil unit 110 preferably is a litz wire wound multiple times into a coil. The coil unit 110 extends along the longitudinal length of the inductor unit 100.

The electrically conductive element 120 may be formed in one piece. However, in relation to Fig. 3a, it is more easily described as having a first part 121, a second part 122 and a third part 123. In this case, the first part 121 corresponds to the part including the active side 100b of the inductor unit 100, while the other parts 122, 123 serve to reduce the inductance of the circuit. Joining the three parts together might allow for a more optimized design. Typically, the different parts of the electrically conductive element 120 are of the same material but it can equally well be a combination of for example copper and aluminum. The first part 121 of the electrically conductive element 120 has a generative side 121a facing the coil unit 110 and an active side 121b corresponding to the active side 100b of the inductor unit 100. In practice, it is the active side 100b of the inductor unit 100 which faces the workpieces 20, 21 during welding. As seen in Fig. 3a, the generative side 121a of the first part 121 of the electrically conductive element 120 has a larger surface area than the active side 121b. The first part 121 of the electrically conductive element 120 tapers from the generative side 121a, via a transfer side 121c, to the active side 121b. In this embodiment, the first part 121 of the electrically conductive element 120 tapers from the generative side 121a to the active side 121b in a direction perpendicular to the longitudinal extension of the inductor unit 100. Hence, an electric current flowing in the generative side 121a of the electrically conductive element 120 will be forced to flow to the active side 121b to form a closed current loop, utilizing the transfer side 121c, which is not covered by any soft magnetic material 130. The transfer side 121c may be seen as an end portion or gable of the inductor unit 100 in Fig. 3a.

A smaller cross-sectional surface area of the active side 100b, 121b means a higher current density and thereby higher power density. Through transformer action and a minimal current leakage in the electrically conductive element 120 due to the soft magnetic element 130, the total current through a cross-section of the active side 121b is almost the size of the coil current times the number of turns in the coil unit.

Furthermore, the first part 121 of the electrically conductive element 120 has a first opening 125 and a second opening 126, which can be seen on the transfer side 121c of the inductor in Fig. 3a. These openings 125, 126 are configured to extend within the first part 121 of the electrically conductive element 120, along the majority of the length of the inductor unit 100 to form a U-shaped channel. The first and second openings 125, 126 may be useful for cooling of the electrically conductive element 120. The first and second openings 125, 126 may also be referred to as cooling channels. The cooling channels are configured to receive fluid media, such as gas or liquid media.

Notably, the need of cooling of the inventive inductor unit 100 is reduced due to the high efficiency in heating of the workpieces 20, 21 to be welded. However, cooling is beneficial for repeatability and for continuous operation. Despite being efficient, certain losses will be generated both in the coil unit 100, soft magnetic element 130, and electrically conductive element 120 as well, due to thermal transfer from the workpiece.

In Fig. 3a, the second part 122 of the electrically conductive element 120, which is optional, has a substantially block-like shape and is arranged within an inner part of the coil unit 110. This feature is more clearly visible in Fig. 3b. Beneath the second part 122 of the electrically conductive element 120, i.e. in a direction towards the active side 100b of the inductor unit 100, a soft magnetic element is arranged, which will be discussed further below. Optionally, the soft magnetic element is arranged above the second part 122.

The third part 123 has a similar shape as the second part 122 of the electrically conductive element 120 and is arranged on the side of the coil unit 110 facing the generative side 100a of the inductor unit 100. The third part 123, which is optional, is configured to reduce the inductance of the circuit, but also simplifies application of pressure on the inductor unit 100 (and thereby also the workpieces 20, 21 to be heated) during use as well as contribute to the cooling of the inductor unit 100.

The soft magnetic element 130 may be provided on one or more parts of the inductor unit 100. In Fig. 3a, a first part 131, a second part 132, a third part 133 and a fourth part 134 is shown. These parts are substantially rectangularly shaped. The soft magnetic parts 131, 132, 133, 134 are arranged on respective side portions of the inductor unit 100. As previously mentioned, the soft magnetic element 130 is typically a soft magnetic ferrite or a powder-based core of flux wire, configured to conduct magnetic fields but no current. Hence, the soft magnetic element 130 may be seen as a barrier for electrical currents. The soft magnetic element parts 131, 132, 133, 134 are arranged along the side portions of the funnel shaped/tapering electrically conductive element 120, to help concentrate the induced current in the active side 100b of the inductor unit 100. Optionally (not shown), the soft magnetic element 130 may be arranged on a generative side 100a of the inductor as well. The preferred position and geometry of the soft magnetic element 130 in relation to the electrically conductive element 120 depends on the application, geometry, material selection and design. Soft magnetic materials 130 are often made in shapes with limited size and some soft magnetic materials are difficult to machine, making it necessary to use several pieces rather than one big unit. In certain setups it might be beneficial to use a soft magnetic element of one piece, or different pieces assembled together. Sometimes it may be beneficial to introduce gaps between different parts of the soft magnetic elements to reduce high magnetic flux density concentrations, depending on design and material selection.

The longitudinally extending inductor unit 100 of Fig. 3a is shown in cross-section in Fig. 3b. Here, it is shown that the inductor is a layered structure. Below the second part 122 of the electrically conductive element 120, a fifth part 135 and a sixth part 136 of the soft magnetic element 130 is shown. The litz wire 110 surrounds the second part 122 of the electrically conductive element 120 and the fifth and sixth parts 135, 136 of the soft magnetic elements, is sandwiched between the first part 121 and the third part 123 of the electrically conductive element 120.

With the inductor unit 100 shown in Figs. 3a and 3b, an induced current flowing through the inductor unit 100 is concentrated at the active side 100b of the inductor unit, which also corresponds to the active side 121b of the electrically conductive element 121 described above.

As a result of the inductor arrangement shown in Figs. 3a and 3b, a concentration of a relatively small current entering the coil unit 110 can be achieved in the active side 100b of the inductor unit 100 configured to be arranged in the vicinity of the workpieces 20, 21 to be welded. When the induced current travels through the electrically conductive element 120 (or its parts), it is forced down towards the tapered portion of the longitudinally extending funnel shaped first part 121 of the electrically conductive element 120, i.e. the current travels from the generative side 100a, via the transfer side 121c to the active side 100b of the inductor unit 100. In other words, the current is concentrated from a relatively broad surface area (i.e. larger cross-sectional surface area) in the generative side 121a, corresponding to the space just below the coil unit 110, to a narrower surface area in the active side 121b of the electrically conductive element 120, corresponding to the active side 100b of the inductor unit 100.

Fig. 3c illustrates a part of an inductor unit 100, also referred to as a longitudinal flux inductor, as the one shown in relation to Figs. 3a-b. In Fig. 3c as compared to Figs. 3a-b, the generative side 120a of the electrically conductive element 120 is subjected to surface enlargement to form a relatively larger cross-sectional surface area for the current, without consuming space in the width direction, which could otherwise interfere with the workpieces or other equipment. Instead, the height of the inductor unit 100 grows, where there might be more space available. The surface enlargement may be described as being achieved by bending or wrinkling the generative side 121a of the electrically conductive element shown in Figs. 3a-b.

In recesses provided in the electrically conductive element 120, a coil unit 110 is wound. In Fig. 3c, two coils are used. Furthermore, in this drawing, the coil unit 110 is substantially square shaped. In reality, the corners of the square may be more rounded. The coils may be connected in series or in parallel depending on the preferred inductance and/or impedance matching and setup. Inside the coil unit 110, a square shaped piece is formed, illustrating a piece of soft magnetic element 130, built up by several smaller pieces. The big flat sides of the electrically conductive element 120, are covered by soft magnetic material, guiding the magnetic flux around the active side of the inductor unit 100. If the active side 120b of the soft magnetic element 120 is focused into a small tip, it may have very high power density and work like a spot welder, useful for example for preforming of carbon fiber weave.

Fig. 3d is a cross-section view of the inductor unit 100 of Fig. 3c. Here, the surface enlargement of the generative side 120a with respect to the inductor unit of Figs. 3a-b is illustrated. The generative side 120a in Fig. 3c may be interpreted as being defined by two U-shaped recesses or sides in the electrically conductive element 120. Together, the U-shaped generative sides 120a contribute to a relatively longer cross-sectional surface area, or, as mentioned above, a cross-sectional surface width as compared to the one on the active side 120b. The generative side(s) 120a may also be described as an internal surface area of the electrically conductive element 120, which is larger than the cross-sectional surface area of the active side 120b of the same electrically conductive element 120. As is clear from Fig. 3c, the current travels from the generative side 120a to the active side 120b via the transfer side 120c which is free from soft magnetic element(s).

An advantage with the technology described herein is the flexibility and opportunity to adapt the heating pattern etc., to achieve a desired heating profile. This is done by modifying the electrically conductive element 120, such as making it narrower at a certain location, i.e. at the cross-sectional surface area of the active side 120b, 220b, or to locally remove material between the electrically conductive material 120 and the workpiece for the current to increase its distance to the workpiece and thereby its contribution to the heat generation.

Where the electrically conductive material 120 is further away from the workpiece(s) to be heated, a non-electrically conductive material may be added in the interface between the electrically conductive material and the workpiece(s) for mechanical support reasons as well as for cooling the surface of the workpiece(s). The interface material can typically be a polymer, a ceramic or a composite material and may have any type of thermally conductive properties. Another option of how to change the heating pattern would be machine pockets in the active side 120b of the electrically conductive element 120, in which materials can be added, such as a soft magnetic material, aimed to guide the current path, and thereby control the heating pattern. Alternatively, a material with completely different thermal properties may be beneficial to change the thermal loading of the workpieces. These types of actions are illustrated in Fig. 3e.

The support or fixture of the workpieces, on the opposite side of the inductor unit 100, 200, may also affect the heating pattern due to thermal loading as well as material selection. A non-magnetic and non-electrically conductive fixture will not influence the electromagnetic fields from the inductor, while electrically conductive materials will induce opposite directed currents, reducing the efficiency as well as the heating depth, i.e. pushing the heating towards the surface closest to the inductor unit 100, 200. It may also be used to reduce edge effects or to reduce heating of undesired areas. Soft magnetic material in the fixture may be used to control the heating pattern as well as to increase the depth of the heating, i.e. extending the heat generation further away from the inductor unit 100, 200, useful for example for welding of thick workpieces.

If the space constrain is in the height direction, it is possible to bend the generative side 120a side of the inductor away from the weld seam area according to Figs. 3f -3g. In this particular case, a slit, also referred to as an end portion 140, is added in the electrically conductive element, forcing the current from the generative side 120a to the active side 120b through the transfer surfaces 120c, being the walls of the slit 140, in this case perpendicular to the active side 120b of the electrically conductive element 120 to form a closed current loop. In Fig. 3f, the electrically conductive element 120 is substantially L-shaped. It should be noted that the geometry of the inductor unit 100 may have complex shapes, despite illustrated with a geometry with straight sides and perpendicular angles. The soft magnetic element 130 may be built by a single or several pieces. In Fig. 3g it is three pieces, from the purpose of manufacturability. Also from performance point of view it may be beneficial to divide the soft magnetic element into several pieces, and even introduce small gaps between different parts of the soft magnetic element 130 to distribute the magnetic flux more uniformly in the material and thereby reduce losses and the risk of electromagnetic saturation. Saturation is a phenomenon that makes a material non-magnetic when the magnetic flux density reaches a too high flux density. This limit varies with different materials and temperatures.

By completely encapsulating the coil unit 110 in the electrically conductive element 120, efficiency is improved and stray inductance of the circuit is reduced. In this case, the inductor unit 100 consists of two different coils, which may be connected in parallel or in series for the best result in terms of impedance matching, voltage, etc.

Another version, which may be referred to as an upstanding version of the inductor unit, where the coils are encapsulated inside of the electrically conductive element is shown in Figs. 3h-3j. The embodiment is similar to that of Figs. 3c-3e, with a quadratic coil unit including two coils, surrounding a soft magnetic element further extending to the active side 120b of the electrically conductive element 120. The main difference is that the electrically conductive element 120 extends on the generative side 120a to almost surround the coil unit 110 completely, with a small slit at the top, similar to Figs. 3f-3g, where the current is forced to go from the generative side 120a, via the transfer sides 120c, in this setup being substantially longer than in the setup of Figs. 3c-3e, to the active side 120b, more similar to Figs. 3f-3g. It should be noted that the opening or slit may be larger, creating an embodiment in between Figs. 3c-3e and 3h-3j. In the latter embodiment, also a mechanical structure has been added for support and fixturing purposes of the inductor unit 100 in for example a robotic actuator or press.

In Figs. 3i-3j, yet another electrically conductive part 122 has been added, as well as two more soft magnetic elements 130, where the new elements are positioned in a non-electrically conductive structural support or tray 150. The added element means that the inductor may be adapted for different workpiece 20, 21 geometries, for example different materials, lengths, widths, thickness, or curvature, without changing the entire in inductor unit. Typically, the setups are sensitive to the parameters describes above among others, where this solution creates a cost effective way of handling this. For example cutouts, curvature, etc, described in relation to the electrically conductive element 120 in Fig. 3e may be performed in the added electrically conductive element part 122.

The tray 150 may be produced in a high or low thermally conductive material, depending on the desired thermal loading on the workpieces 20, 21, for example a polymer, a composite, or a ceramic material. The added electrically conductive element 122 should be either in electrical contact with the other electrically conductive element 121, or more rationally, insulated from each other, where the current in the first electrically conductive element 121 induces the corresponding current in the second electrically conductive element 122. The part may be insulated by any ceramic or polymer material with sufficient dielectric properties, such as polyimide, aramide or sintered aluminum oxide or aluminum nitride. It may be beneficial to have a good thermal contact between the two different electrically conductive elements 121, 122, to eliminate the need of cooling in the second electrically conductive element 122. The tray 150 also provides a mechanical support outside of the weld seam area, acting both as a heat sink and preventing delamination in the case with too much undesired heat generation. The tray 150 is also adaptable to different inductor units as well as sizes of weld seam areas.

In Figs. 3i-3j, the two different electrically conductive elements 121, 122 are mating each other using flat surfaces, but it may be beneficial to add a surface enlargement to reduce resistive losses, such as two combs fitting together, or a male and a female shape of any geometry. A constant gap between the two electrically conductive elements 121, 122 is preferred, since the proximity effect will then distribute the current in a favorable way to minimize the losses in the two parts.

The principle of the inductors shown and described in Figs. 3a-3k, is that a current is induced in the workpiece along a line or open curve, where the current is travelling from one end to the other, often referred to as longitudinal field inductors. As discussed previously, all current loops must be closed, thus the current in the workpieces needs to find a way back, substantially not being a part of the welded area. For smaller workpieces, this is a challenge, causing edge effects or other undesired heating. Since the area to be welded is thermally loaded or cooled by the fixture and inductor unit, already a small heat generation outside of the weld or clamped area might cause trouble with overheating and delamination. One solution to overcome this problem is to provide an easy return path for the current.

In Fig. 3k, the inductor unit is equipped with an electrically conductive return part 160. The return part 160 is preferably made from copper. At each end of the inductor, electrically conductive electrodes 161, 162 are mounted, being electrically insulated from the electrically conductive elements 120 of the inductor unit 100. The electrodes 161, 162 may be in contact with the surface of the workpiece, or more beneficial, they are connected or clamped to the sides of the workpieces, either directly through their design or via assembled parts, for example spring loaded electrodes that can ensure proper contact between the feedback loop of the current and the sides of the workpiece(s). The short ends of the workpieces 20a, 20b and/or 21a, 21b are particularly well suited to transfer the current from the workpiece to the electrodes since this allows the current to flow along the entire weld length without affecting the heating uniformity. Also, the short ends are typically cut, and a cut surface allows for good electrical contact to the carbon fiber of different layers, while in other areas, a thin layer of plastics from the manufacturing reduces the electrical connection. Electrodes might also be attached along the entire long edge of the workpieces 20c, 20d, 21c, 21d to reduce edge effects by cooling the surface as well as enhance the path for the electrical current. The return path for the current is preferably a feature of the inductor unit, but may as well be a part of the fixture.

The electrically conductive return part 160 provides a return path for the current with low electrical resistance, itself being a passive part of the setup as in Fig. 3k. Alternatively, the electrically conductive return part 160 may be a part of an electrically conductive element 121, 122, having a generative side 121a, 122a, in which a voltage is induced that forces at least parts of the return current to flow in the conductive return part 160, rather than in the workpieces 20, 21.

Another way to mitigate the challenges with undesired heating due to the return currents paths is to control the travel of the current using induced voltage in the workpiece. In the same way as current can be induced along a line or open curve, the inductor unit may form a closed current loop by inducing both positive and negative current directions simultaneously at different locations. This type of inductor unit may be referred to as a transversal flux inductor.

The inductor unit 100 of Fig. 3k includes a non-magnetic element 170 located at end portions of the electrical conductive element (not shown). These end portions may also be referred to as short sides. The purpose of the non-magnetic element 170 is to cool the surface of the workpiece being closest to the inductor unit 100 during welding, and at the same time apply pressure to the workpiece materials 20, 21. The non-magnetic element 170 may be electrically conductive. Optionally, the non-magnetic element 170 is not electrically conductive. In one case, the non-magnetic element 170 is preferably electrically insulated from the electrically conductive element(s) 120 to prevent the occurrence of a short circuit between the electrically conductive element(s) 120 of the inductor unit 100. Preferably, the non-magnetic element 170 has a thermal conductivity of 1 W/mK or higher, such as 10 W/mK or even more preferably 100 W/mK. This is to prevent undesired melting of the top surface of the workpiece 21 facing the inductor 100 during welding.

A non-electrically conductive structural support or tray 150 is also provided in the embodiment of Fig. 3k, which has the same purpose as described above in relation to Figs. 3i-3j.

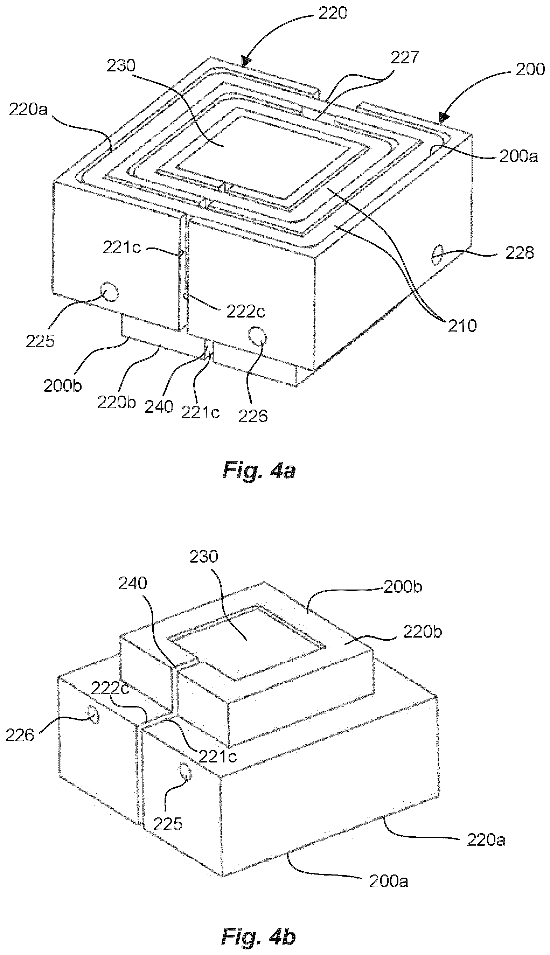

Figs. 4a-e is a perspective view of an inductor unit 200 according to another embodiment. In this embodiment, the inductor unit 200, also referred to as a transversal flux inductor 200, may have a substantially quadratic shape.

Similarly to the inductor unit 100 shown in Figs. 3a and 3b, the inductor unit 200 of Fig. 4a has a generative side 200a and an active side 200b, and comprises three major components; a coil unit 210, an electrically conductive element 220, and a soft magnetic element 230.

The coil unit 210 is preferably a litz wire which enters the inductor unit 200 via the recesses 227 in the electrically conductive element 200. The coil unit 210 is wound in traces or grooves in the electrically conductive element 200 in a direction around a center axis (not shown) of the inductor unit 200. The traces in the electrically conductive element 200 encapsulate the coil unit 210, which may also be referred as a wire, but also form a large cross-sectional surface area for the induced current in the generative side 220a of the electrically conductive element, which minimizes losses as well as circuit inductance. The coil unit 210 may be completely encapsulated within the electrically conductive element, for example by adding a lid to the open surface of the traces containing the coil unit 210. Alternatively, the coil unit may be wound inside of drilled or machined holes or grooves in the electrically conductive element 220.

The electrically conductive element 220 may be formed in one piece. Typically, the electrically conductive element 220 is made of the same material, but may also be a combination of two or several materials. For instance, the electrically conductive element 220 may be a coated structure, such as copper coated aluminum. The electrically conductive element 220 has a first side 220a corresponding to the generative side 200a of the inductor unit 200 and a second side 220b corresponding to the active side 200b of the inductor unit 200. In practice, it is the active side 200b of the inductor unit 200 which faces the workpieces 20, 21 during welding. As seen in Fig. 4a, the first side 220a of the electrically conductive element 220 has a larger cross-sectional surface area than the second side 220b. In Fig. 4b, a step-like shape is shown between the first side 220a and the second side 220b of the electrically conductive element 220.

Notably, in all shown embodiments, the second side 200b of the inductor unit 200 appears substantially flat and smooth. However, the surface of the active side 200b may have a certain degree of surface roughness, or even patterns. Furthermore, the surface need not be limited to quadratic shapes. For instance, the cross-section may vary over the active side, and the corners may be smooth. Some of these things are illustrated in Fig. 3e.

On a side of the electrically conductive element 220, in Fig. 4a illustrated as opposite the recesses 227, a corresponding end portion, or slit 240, is provided, creating two transfer sides 221c, 222c, which extend along a direction perpendicular to the active side 220b of the inductor unit 200, between the generative side 200a and the active side 200b of the inductor unit 200. It should be noted that more than one slit may be provided, still providing the same functionality, thus creating more transfer sides 221c, 222c, 223c, etc.. Several transfer sides may be convenient in certain designs, seen in other embodiments further down. The slit may have any shape and direction, i.e. the transfer sides 221c, 222c are not limited to being straight or perpendicular to the active side 220b.

For all embodiments described herein, the slit may also be defined as an end portion, a short side or a gable of the inductor unit 100, 200. The end portion 140, 240 is also part of the electrically conductive element 120, 220. The slit 140, 240 is preferably not covered by a soft magnetic material 130, 230. In Figs. 3a-3b, the end portion 140, or gable, may be regarded as a slit with a close to infinite radius longitudinally extending along the active side 100b of the inductor unit 100. Moreover, the end portion 140, 240 extends at least partially along the active side 120b, 220b of the at least one electrically conductive element 120, 220, and preferably between the generative side 120a, 220a and the active side 120b, 220b of the at least one electrically conductive element 120, 220. Current induced by the coil unit 110, 210 is preferably led through the end portion 140, 240 to the active side 100b, 200b of the at least one electrically conductive element 120, 220 facing the workpiece(s) to be welded.

Referring back to Fig. 4a, through the slit 240, i.e. in a gap (end portion) between the transfer sides, or parts, 221c and 222c, the at least one coil unit 210 can be seen. An electric current flowing in the generative side 220a of the electrically conductive element 220 will be forced to flow via the transfer sides 221c, 222c to the active side 220b and back to form a closed current loop. Notably, the total cross-sectional surface area of the generative side 220a is substantially larger than that of the active side 220b of the electrically conductive element 220. During use, the workpieces 20, 21 to be heated/welded are to be arranged below the active side 200b since the current (and thereby also the heat) is concentrated in this region of the inductor unit 200.

Moreover, a first opening 225 and a second opening 226 is provided on the electrically conductive element 220. The first and second openings 225, 226 may extend into the inductor device 200 and be integrated in the structure of the electrically conductive element 220. The first and second openings 225, 226 may extend in the form of channels throughout the inductor unit 200. The first and second openings 225, 226 may also be referred to as cooling channels. The cooling channels are configured to receive fluid media, such as gas or liquid media. Notably, the need of cooling of the inventive inductor unit 100 after use is reduced due to the high efficiency in heating of the workpieces 20, 21 to be welded. The cooling channel(s) 225, 226 may alternatively share the space with the coil unit 220 in the inductor unit 200.

The first and second openings 225, 226 are useful during cooling with liquid or gas of the electrically conductive element 220 as well as the coil unit 210, soft magnetic material 230 and potentially also the workpiece(s). The openings 225, 226 may be equipped with fittings or other connection means to feed the cooling fluid. There may be more than one cooling channel, and for manufacturing purposes, some openings 228, are needed for drilling of the channels, and can be sealed or plugged before usage of the inductor unit 200.

In the case with a 3d-printed electrically conductive element, not only the electrical design, but also thermal and mechanical may be optimized and cooling channels and support structures may have very complex shapes, not possible to manufacture using traditional production methods. The coil unit and the soft magnetic element must however be possible to fit in the inductor unit according to the description herein.

Enclosed within the center of the electrically conductive element 220, a soft magnetic element 230 is arranged. In the shown embodiments, the soft magnetic element 230 has a substantially quadratic shape which extends along the center axis of the inductor unit 200.

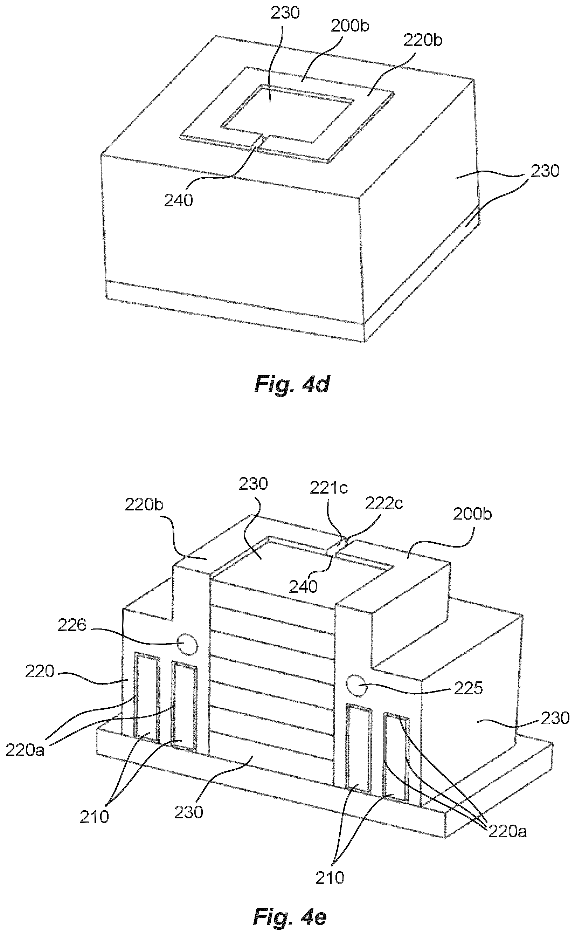

The soft magnetic element 230 may be arranged all along the boundary surface of the inductor unit 200 as well, where no currents are desired, see Fig. 4d. To prevent a short circuit through the slit 240 for the currents in the electrically conductive element 220, the soft magnetic element 230 might need to have a slit (not shown) as well, or be electrically insulated from the electrically conductive element 220, at least close to the slit, depending on the type of soft magnetic material. The voltage across the slit depends on the size and geometry, operating frequency, current level, workpiece properties, etc. To prevent a malfunction due to short circuit, the width of the slit and its electrical insulation properties relative to the voltage across the slit needs to be considered. Likewise, the electrical insulation between the turns of a coil or between different coils of the coil unit 210 and between the coil unit and the electrically conductive element 220 must be sufficient.

In Fig. 4b, the active side 200b of the inductor unit 200 of Fig. 4a is shown. From Fig. 4b, it is clear that the slit 240 provided in the electrically conductive element 220 extends between the generative side 200a and the active side 200b of the inductor unit 200. The transfer side 220c between the generative side 200a of the inductor (facing downwards in Fig. 4b) and the active side 200b (facing upwards in Fig. 4b) is illustrated as a step-like configuration. However, other transitions are possible as well. For instance, the transition may be curved or have any other smoother shape. Smooth transitions are preferred from an efficiency and thermal point of view, while the step-like configuration may be easier to manufacture. The soft magnetic element 230 shown in Fig. 4a is visible on the active side 200b of the inductor unit in Fig. 4b. Hence, it is clear that the soft magnetic element 230 may extend through the inductor unit 200, providing a path for the electromagnetic flux to pass.

During use, the current induced by the coil unit 210 in the electrically conductive element 220 is concentrated in the active side 200b of the inductor unit 200 via the slits 240, or rather via the transfer sides 221c, 222c of the slit shown in Fig. 4b. As is clear from Figs. 4a and 4b, the slit 240 extends in inner regions of the inductor unit 200 as well as at the circumference of the inductor unit. The slit 240 creates the two transfer sides 221c, 222c which may also be referred to as the walls of the slit 240/end portion. The transfer sides are not covered by a soft magnetic element 230. Furthermore, two tube fittings (not shown) may be provided in the areas corresponding to the openings 225, 226 in Figs. 4a and 4b, for easy connection of for example cooling air or water, as briefly mentioned above.

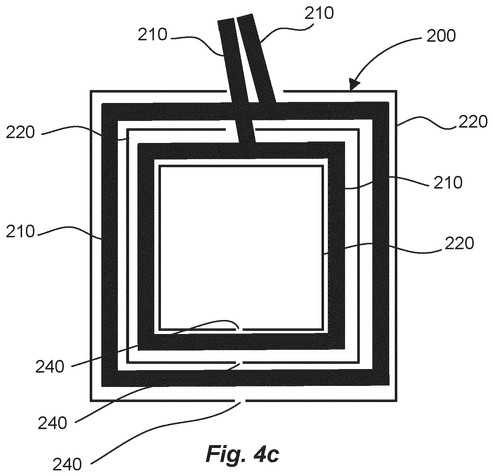

To better visualize the generative part 200a of the inductor unit 200, as well as the internal parts of the inductor unit 200 arranged in connection to the coil unit 210, a top view of the inductor unit 200 is shown in Fig. 4c. Here, the inductor of Fig. 4a and 4b is shown from a different perspective. A top view of the slit 240 provided in the electrically conductive element 220 is shown.

With reference to Fig. 4d, an active side 200b of the transversal inductor unit 200 is shown, now with the soft magnetic element 230 not only present inside the inductor unit 200, but also around the entire circumference of the inductor unit 200. For instance, the soft magnetic element 230 could be a soft magnetic ferrite material or a powder core, or any other suitable material mentioned previously.

The embodiment of Fig. 4d is shown in cross-section in Fig. 4e. Here, the slit 240 faces in an opposite direction as in Fig. 4d. As shown in Fig. 4e, the coil unit 210 is arranged in grooves, traces or spaces in the electrically conductive element 220. Here, the electrically conductive element 220 is made in a single piece. Optionally, it may be an assembly of two or more parts. The two openings 225, 226 previously described in relation to Figs. 4a and 4b above, extend in a direction corresponding to the shape of the electrically conductive element 220, around the center axis (not shown) of the inductor unit 200. As briefly mentioned, the two openings 225, 226 are configured to transfer cooling media to maintain a steady temperature of the entire inductor unit 200.

The inductor unit 200 functions in the following manner. The coil unit 210 induces current in the generative side 220a of the electrically conductive element 220. When the induced current reaches the slit 240, it is forced to pass through the transfer sides 221c, 222c to the active side 220b to form a close current loop, since the other surfaces of the inductor unit 200 are covered by the soft magnetic element 230. The soft magnetic material forms a variant of what is usually referred to as a pot core, a soft magnetic element with a center leg, a bottom, and a surrounding part. The soft magnetic element 230 creates a path for the electromagnetic flux, flowing all around the coil unit 210 as well as the electrically conductive element 220 and inducing currents in the workpiece(s) 20, 21.

At the active side 200b of the inductor unit 200, which corresponds to the second side 220b of the electrically conductive element 220, the current density is substantially higher than at the generative side 200a of the inductor unit 200. In other words, the current is more concentrated at the active side 200b of the inductor unit 200 due to the difference in surface area between the generative and active sides of the electrically conductive element 220. As previously mentioned, the workpiece(s) 20, 21 to be heated are to be arranged below this active side 220b since the current (and thereby also the heat) is concentrated in this region of the inductor unit 200 during use.

The soft magnetic element 230 may be a single piece or include multiple parts. Both soft ferrites and powder cores are typically produced through pressing and have a limited size. Also, some soft magnetic materials are difficult to machine, which is another reason to build the soft magnetic element 230 out of several parts. Dividing the soft magnetic element into several pieces may also be a way of reducing local concentrations of electromagnetic flux density to reduce losses and prevent magnetic saturation. Utilizing materials with different properties, in particular relative permeability, is another way of controlling the losses, prevent saturation and optimizing the heating pattern.

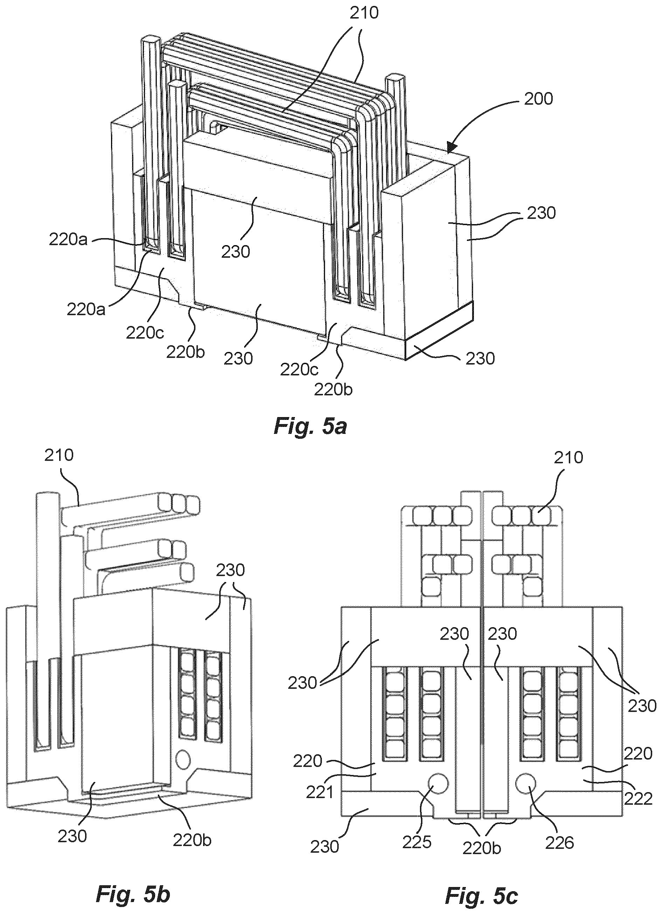

As described previously, more than one slit may be beneficial in some designs. In Fig. 5a-c there is an illustration of an inductor unit 200 having two slits, and thereby four transfer sides, in the electrically conductive element 220, forming a first and a second electrically conductive element 221, 222. In contrast to Fig. 4a, this embodiment is built as two separate units, Fig. 5a,b, and then assembled as two mirrored or rotated parts, see Fig. 5c. Instead of having a coil unit 210, where the coils are crossing the slits, the coils in this case are limited to cover a section each of the inductor unit 200. To be more specific, they cover one of the pieces of the electrically conductive element 220. The different coils may then be operating individually, or together, in sequency or simultaneously, at different frequencies or at the same frequency. If the coils operate at the same frequency, the currents may have a phase shift between 0 and 360 degrees or alternating between for example 0 and 180 degrees. The coils may for example be connected in parallel, in series or in anti-series, or alternating in between different configurations, for example using mechanical switches, or a network of inductors and/or capacitors.

A benefit of running the coils in each electrically conductive element at the same frequency and with a phase shift defined as 180 degrees, which creates current of different directions in the active side 220b of the two different electrically conductive elements 221 and 222 is the avoidance of undesired return paths for the induced currents in the workpieces, associated with a transversal flux inductor.

By having a phase shift of zero degrees, corresponding to having all the current on the active sides 220b going in the same direction, a longitudinal field operation is achieved, which generates heat in the center of the inductor unit, but with the risk of undesired heating outside of the weld area A. However, by alternating the phase shift during a welding operation, a uniform heating pattern in the weld seam area can be obtained, with limited or manageable heat generation outside of the weld seam area. By utilizing a different phase shift, the heating pattern in the weld area can be skewed in either direction. Like the previous embodied transversal flux inductor shown in Fig. 4d, 4e, a soft magnetic element 230 is covering the sides and center of the electrically conductive element 220, which may be seen as being built up by two electrically conductive elements 221, 222, only leaving the active sides 221b, 222b, the generative sides 221a, 222a and the transfer sides 221c, 222c uncovered. In the longitudinal field operation, as in Figs. 3a-3k, almost no flux in going in the center part of the soft magnetic element, while in transversal flux operation, the highest flux densities are typically shown in the center part of the soft magnetic element, depending on the geometry.

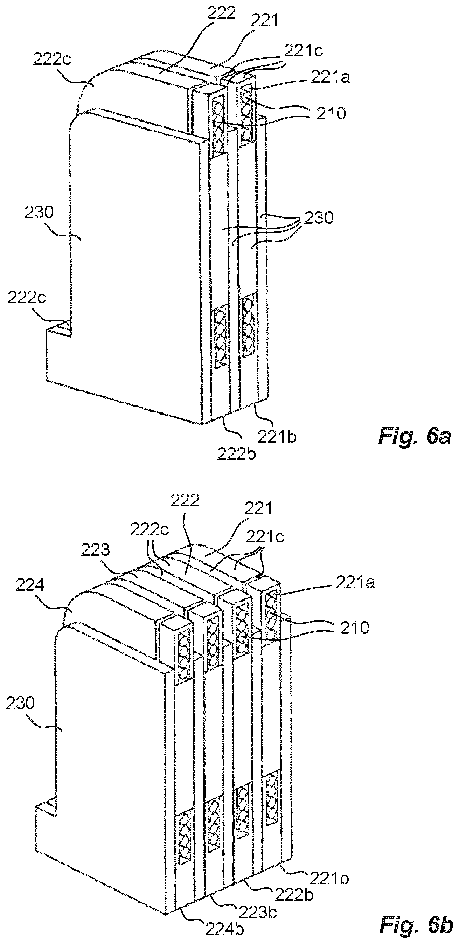

Another embodiment of the concept just described is shown in Fig. 6a, where the coil unit 210 has been more encapsulated inside of electrically conductive elements 220, similar to Figs. 3h-3j, to reduce the flux density in the soft magnetic elements 230, lower the inductance, and increase the efficiency. Also in Figs. 6a-b, current travels from the generative sides 221a to the active sides 221b via the transfer sides 221c. To further increase the flexibility in terms of adjusting the heating pattern, including improved flexibility to handle different geometries of the workpieces, more than two different coils and electrically conductive elements may be used, see Fig. 6b. As previously described, different types of operation or alternating operation modes, including different phase shifts between the currents in the different coils may be used to change, adjust or move the heating pattern in the weld seam area A.

As shown in Fig. 6b, the electrically conductive element 220 can be divided into multiple dependent or independent parts 221, 222, 223, 224. The presence of current, amplitude frequency and phase shift is controllable in each electrically conductive elements part 221, 222, 223, 224, either individually or jointly. In Fig 6b, the electrically conductive element parts 221, 222, 223, 224 are separated parallel to a major direction of the current. However, it should be understood that the current can be directed in any direction, as illustrated briefly in Fig. 3e which exemplifies a curved, smooth surface of the active side of that inductor unit. For instance, a zig-zag pattern of the electrically conductive element 220 on the active side 220b (not shown) may be beneficial for certain material layups of CFRP workpieces.

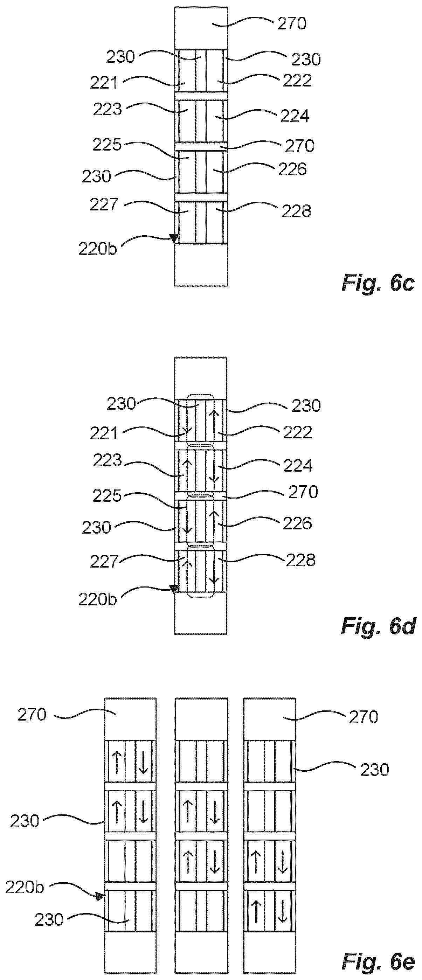

Figs. 6c-6e illustrate an active side 220b of the inductor unit 200. In particular, Fig. 6c illustrates an embodiment where the electrically conductive element 220 has been split into eight independent parts 221-228. Optionally, the electrically conductive element 220 may be split into fewer of more parts than the ones shown and described in Fig. 6c, depending on the design of the coil unit 210. The electrically conductive elements 221-228 are separated with a soft magnetic element 230 and/or a non-magnetic element 270. With this inductor design, the current direction can be selected in different ways, see for instance Fig. 6d and 6e where the current direction is illustrated by arrows pointing in different directions.

In Fig. 6d, the current travels in opposite directions on the active side 220b of each of the adjacent conductive elements part 221, 222, 223, etc. The induced currents in the workpieces 20, 21 are forced to go in minor loops or 8-shaped patterns, as illustrated by the dotted lines in Fig. 6d. This way, temperature uniformity for certain material layups of the CFRP workpieces can be improved.

Alternatively, as shown in Fig. 6e, three inductor units 200 of the type described in Figs. 6c-6d are arranged side by side. In this configuration, at a certain area of the workpiece(s) to be welded, different parts of this area may be heated at each point in time. Alternatively, the workpiece(s) may be heated simultaneously using different frequencies in each one of the separate inductor units 200. Optionally, the workpiece(s) may be heated simultaneously using the same frequency, but with different phase shifts of the current. For instance, the area of the workpiece(s) to be welded may be near edges of the workpiece(s).

The inductor arrangement shown in Fig. 6e may be beneficial both for continuous or dynamic welding, as well as static welding. For instance, it may be beneficial for static welding where the length of the weld zone varies, or for increasing temperature uniformity of the weld zone in general.

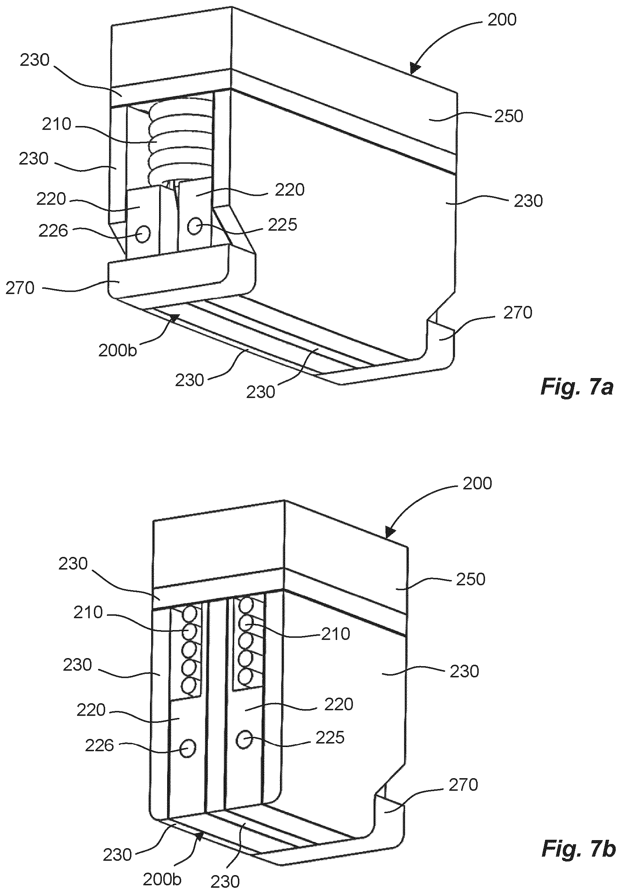

In Figs. 7a-7b, a further embodiment of a transversal flux inductor is shown. The inductor unit 200 of Figs. 7a-7b shares similar features with the inductor units 200 shown and described in relation to Figs. 4-6.

The coil unit 210 in Fig. 7a is surrounded by the soft magnetic element 230 to a greater extent than the electrically conductive element 220. An advantage of this configuration is that the inductor unit 200 becomes more space-efficient. Similar to the inductor unit 200 in Figs. 4 and 5, the coil unit 210 of Fig. 7a is built up by only one coil, representing a more compact version of Figs. 6a-e.

Similar to Fig. 3k, the inductor unit 200 of Fig. 7a includes a non-magnetic element 270 located at end portions of the electrical conductive element 220. These end portions may also be referred to as short sides. The purpose of the non-magnetic element 270 is to cool the surface of the workpiece being closest to the inductor unit 200 during welding, and at the same time apply pressure to the workpiece materials. The non-magnetic element 270 may be electrically conductive. Optionally, the non-magnetic element 270 is not electrically conductive. In one case, the non-magnetic element 270 is preferably electrically insulated from the electrically conductive element(s) 220 to prevent the occurrence of a short circuit between the electrically conductive element(s) 220 of the inductor unit 200. Preferably, the non-magnetic element 270 has a thermal conductivity of 1 W/mK or higher, such as 10 W/mK or even more preferably 100 W/mK. This is to prevent undesired melting of the top surface of the workpiece facing the inductor 200 during welding.

The inductor unit 200 of Figs. 7a-7b also includes a fixture 250, which may be referred to as a non-electrically conductive structural support. A purpose of the fixture 250 may be to keep the inductor unit 200 from coming into contact with the workpieces to be welded. Other examples of the purpose of the fixture 250 are described above in relation to Figs. 3i-3j which have a similar feature referred to as a tray 150.

Fig. 8 illustrates a system 1 in which the inductor unit 100, 200 can be used. For instance, the system 1 comprises movement means 40. Movement means 40 may be operatively coupled to both the processing means 30 and the inductor unit 100, 200. The movement means 40 is configured to cause a movement of the inductor unit 100, 200 based on process information received and/or determined by the processing means 30. In other words, the processing means 30 is configured to control the movement of the inductor unit 100, 200. Alternatively, the inductor unit 100, 200 is stationary and the movement means 40 is configured to move the workpieces 20, 21 in relation to the inductor unit 100, 200.

The processing means 30 may be configured to control the applied pressure by controlling the pressure means 50. Typically, the pressure is applied in a direction substantially perpendicular to the weld seam area A of the at least two workpieces 20, 21 to be welded.

The movement means 40 is configured to move the inductor unit 100, 200 relative to the workpieces 20, 21 to be welded, while welding or in between different welds. The movement means 40 may be in operative communication with the processing means 30 and in operative communication with a drive unit 70 that causes the movement of the inductor unit 100, 200. The drive unit 70 may be part of the movement means 40, or be arranged externally of the movement means 40. The drive unit 70 may be a motor such as an electrical motor or pneumatic actuator or similar. Alternatively, the drive unit 70 can be a brushless DC electric motor. The brushless DC electric motor may be a stepper motor. A stepper motor divides a full rotation into a number of equal steps. A benefit with a stepper motor is that it is possible to move and hold at one of these steps without having a position sensor for feedback. The drive unit 70 could also be any type of servo motor.

The processing means 30 may instruct the drive unit 70 to move the inductor unit 100, 200 along a predetermined path. The drive unit 70 can be controlled wirelessly by the processing means 30 or by wire or fiber optic. The drive unit 70 may be configured to follow a predefined protocol stored in an associated memory to the processing means 30, and/or the drive unit 70 is configured to follow instructions caused by a user of the processing means 30. The drive unit 70 may be arranged as a part of the system 1 or as a separate external part, being in operative communication with the system 1.

Optionally, the movement means 40 may be a part of the processing means 30, or be arranged externally of the processing means 30. The movement means 40 may for example comprise a track, frame, a rod or similar arrangement that allows the movement to be controlled in a precise manner. The movement means 40 may further be a robotic arm, parallel kinematic robot or gantry. The movement means 40 can move in incremental steps to control the welding process. The movement means 40 can also move continuously. The movement means 40 may also be manually driven. For instance, the movement means 40 may be arranged in a housing, for example a longitudinal arrangement along which it can move (not shown) for allowing the movement of the inductor unit 100, 200. The movement means 40 may in one embodiment comprise a telescopic arm that is able to be lengthened or shortened during welding so as to allow for different positions of the inductor unit 100, 200.

The system 1 may further comprise cooling means 60 configured to cool down the system 1 during and/or after use. The cooling means 60 is configured to cool the workpieces 20, 21 during and/or after having reached the processing temperature and the weld has been formed. The area to be cooled may include both the weld seam area A as well as the rest of the workpiece(s), due to undesired heat generation, for example along edges or crossing tows in the laminate of the workpiece(s) 20, 21. The cooling may be controlled by the processing means 30. If for instance the welding process is continuous, the system 1 may comprise a roller or cooling cylinder configured to cool the weld seam area A. This roller or cooling cylinder may then be arranged behind the inductor unit 100, 200 as it moves across the workpieces 20, 21. The cooling may alternatively come from a liquid or gas fluid, for example air.

Alternatively, the inductor unit 100, 200 may chill the newly welded area through thermal conduction. Unlike traditional welding inductor designs, the inductor unit 100, 200 described herein may consist of a solid block of thermally conductive material, namely the electrically conductive element, 120, 220, which may be designed to provide a uniform or desired thermal loading of the heated area, which corresponds to the weld seam area A in Fig. 1. The robust design also allows it to be clamped directly or indirectly to the workpiece to form a good thermal contact. The inductor unit 100, 200 may feature other thermally conductive materials, being non-electrically conductive, designed to cool the workpieces for example in areas along the edges of the electrically conductive element 120, 220 or areas not intended to be heated. Materials with a certain thermal conductive or insulating property may be introduced between the electrically conductive element and the workpiece to achieve the desired thermal loading of the surface. Those materials may be loosely placed there or being a part of the inductor unit 100, 200. The electrically conductive element can be equipped with cooling channels; thus, its temperature may be controlled by for example the processing means 30. Similarly, the supporting structure of the workpieces, on the opposite side of the inductor unit can also be designed to provide an active or passive cooling of the workpiece(s).

In another embodiment, the inductor may be equipped with a vibration means (not shown), aimed to reduce the friction between the inductor unit 100, 200 and the surface for the workpiece. To be more specific, the inductor may include a mechanical part of the vibration means, or be in operative communication with the vibration means as a whole. Typically, at least the electronic or the processing means of the vibration means is external and may be the same or similar to the processing means of the inductor unit. The vibration means can be piezoelectric, magnetostrictive, mechanical or electromagnetic to facilitate continuous welding with pressure from the inductor unit.

For example, in the case with continuous welding, a consolidation force is desired at all time, this force may come from the inductor unit, preventing it from moving. A small amplitude vibration will reduce the friction and enable it to move despite a high press force. The vibration means may consist of a mechanical vibrating unit such as a motorized non-balanced rotating mass, or by a piezoelectric or magnetostrictive actuator. The vibrating means is typically driven by a power electronic drive unit, for example supplying a controllable direct or alternating electric voltage or current. Certain heat generation may also come from the vibrations.

For the clamping, or application of consolidation pressure on the workpieces, one possible way of doing this is to have the active part 120b, 220b of the electrically conductive element 120, 220 be thin enough to be able to expand when being pressurized. Utilizing a membrane effect enable a uniform pressure distribution of the weld area, despite the surface may be uneven. The membrane effect may be defined as a flexible and deformable part or surface, constrained along the outer boundary, applying force to a surface. For example, a pressurized balloon, forced towards a surface can deform and under certain circumstances apply a reasonably uniform pressure over a certain surface area, even if the surface is not following the original shape of the balloon. As another example, an inflatable, expandable bladder is commonly used to compact composite materials, similarly as the tube inside a tire. This may be interpreted as a mechanical clamping to maintain a consolidation pressure during welding.

As an alternative, the tray 150, also referred to as non-electrically conductive support, may be built in a material possible to expand as a membrane, typically a polymer material. The expansion of such a membrane, independent of being a part of the electrically conductive element 120 or tray 150, is preferably performed by pressurization, achieved by a gas of liquid, such as air or water. Typical pressures range from sub one bar to tenths or bars. With the higher pressure, a support is needed to prevent squeeze-out of the melted material during the welding process.

Another advantage of the presented inductor concept is the opportunity to build an openable inductor unit for round objects. For example, for joining of pipes, it is advantageous to be able to have an inductor unit enclosing the diameter of the pipe to be welded, still being able to easily take it off after welding. By utilizing an electrically conductive element including two or more parts, this can be achieved, without disconnecting the coil unit, for example using a variant of the inductor illustrated in Figs. 3f-3g.

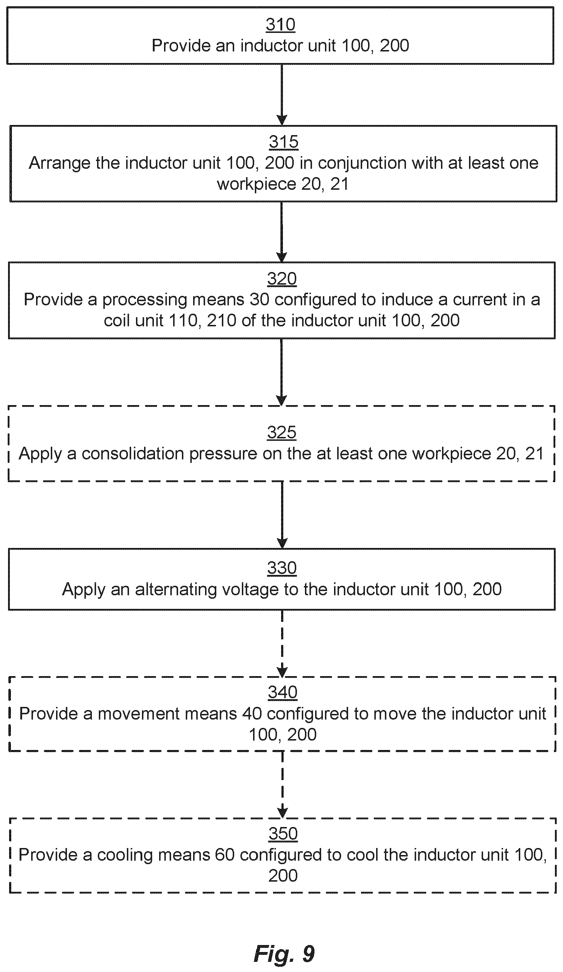

Fig. 9 illustrates a method 300 for induction welding at least two workpieces 20, 21 using the system 1 as described above. The method begins by providing 310 an inductor unit 100, 200 and arranging 315 it in conjunction with at least one of the workpieces 20, 21 to be welded. A processing means 30 is also provided 320. An alternating voltage V is applied 330 to the inductor unit 100, 200 by the processing means 30 and thereby induces an electric current in the electrically conductive element 120, 220 of the inductor unit 100, 200 via the coil unit 110, 210. The current in the electrically conductive element further induces currents in the at least partially susceptive workpiece(s) 20, 21. The aim is to inductively heat the at least two workpieces 20, 21 so that a weld seam is created in a weld seam area A between the two workpieces 20, 21 (cf. Fig. 1). The alternating voltage V is an input signal to the inductor unit 100, 200 and is applied via the processing means 30. However, the method is not restricted to applying solely an input voltage to the inductor. Other electromagnetic signals are applicable as well, such as a current I or a frequency F.

More specifically, the method of induction welding is performed as follows. First, an inductor unit 100, 200 is provided 310 according to any of the embodiments described above. The inductor unit 100, 200 is arranged 315 in conjunction with at least one workpiece 20, 21. Next, a processing means 30 is provided 320 to control the overall functioning of the process as well as the movement of the inductor 100, 200 with respect to the workpieces 20, 21 to be welded. The inductor unit 100, 200 may be positioned by movement means 40, such as a robotic arm. The robotic arm may be controlled by the processing means 30, as described above. A step 325 of applying a consolidation pressure on the at least one workpiece may also be provided before starting the heating process.

By applying 330 for instance an alternating voltage to the inductor unit 100, 200, an electromagnetic field is generated, inducing currents in the electrically conductive element 120, 220 of the inductor unit 100, 200. The current in the electrically conductive element 120, 220 further creates electromagnetic field that induces currents in and thereby heats the workpiece(s) 20, 21 in a weld seam area A, and after a process temperature has been reached, a weld seam is created in the weld seam area A.

Optionally, a step 340 of providing a movement means 40 configured to move the inductor unit 100, 200 is provided, as well as a step 350 of providing a cooling means 60 configured to cool the inductor unit 100, 200 after the welding process is terminated.

The processing means 30 generates a current in the coil unit 110, 210. This current generates a magnetic field which induces opposite directed currents in the electrically conductive element 120, 220, preferably made of copper and/or aluminum or its alloys and thereby counteracting electromagnetic fields, reducing the magnetic flux density of the circuit. As mentioned, a soft magnetic element 130, 230 is provided around the electrically conductive element 120, 220, guiding the resulting electromagnetic flux to the workpieces 20, 21 and forcing the current in the electrically conductive element 120, 220 to flow on desired surfaces, thereby improving efficiency and inducing the desired heating pattern. Since the soft magnetic element 130, 230 has a high electrical resistivity and small magnetic hysteresis losses, only a small amount of heat is generated in the inductor device 100, 200. Hence, in most setups, the efficiency in heating is improved by the provision of the soft magnetic element 130, 230 around the electrically conductive element 120, 220.

As a result of the different inductor units shown in Figs. 3-6, the current induced in the electrically conductive element 120, 220 is guided from the generative side 100a, 200a to the active side 100b, 200b of the inductor unit 100, 200 which is located in close vicinity to the workpiece(s) 20, 21 to be welded.

In other words, by combining the elements of the inductor unit 100, 200 as described above, a rather small current first provided in the coil unit 110, 210 can result in a concentrated and highly efficient heating of the workpiece(s) 20, 21 in the weld seam area A.

When the welding process is terminated, the inductor unit 100, 200 is transferred away from the weld zone, also referred to as the weld seam area A, via the movement means 40. The cooling is achieved rather easily due to the characteristics of the inductor design. More specifically, the copper or aluminum (or the like) used as the electrically conductive element 120, 220 contributes to this rather rapid and controlled cooling. Also the support, or fixturing device of the setup, opposite located from the inductor unit 100 contributes to the cooling of the workpieces. The cooling means described here also prevents remelting of the outer surfaces of the workpiece.

Notably, the method of welding may be performed by a continuous process or by a step-wise static process. Optionally, a load force is applied to the generative side 100a, 200a of the inductor facing away from the workpiece(s) 20, 21 before the electromagnetic field is applied through the processing means 30. Moreover, as long as a concentration of current can be achieved, the bottom part of the inductor unit facing the workpiece(s) may have different cross-sections. The cross-section may for instance be patterned and/or have a varying cross-section over the entire bottom surface. For instance, the surface may be rounded. The transfer of force from the inductor unit 100, 200 to the workpieces 20, 21 can be directly from the electrically conductive element 120, 220, or indirectly via an electrically and/or thermally insulating material. Alternatively, the consolidation force can be applied from the opposite side of the workpiece(s), while the inductor unit is fixed and provides a mechanical support. As mentioned, the force may also come from for example a vacuum bag covering the workpieces, or other mechanical support, not acting on the inductor unit. A vacuum membrane, being part of the inductor unit, is another alternative of achieving the clamping force, being particularly useful for welding of small workpieces or for attaching smaller workpieces onto relatively bigger ones. For relatively thick workpieces, such as 10 mm or more, it may be beneficial to have one inductor unit 100, 200 on each side of the workpieces to easier get the heat generation all the way to the weld seam area A.

In all embodiments of the invention where there are air gaps in the inductor design, an isolation of the air gaps may be required to avoid short circuits.

Notably, the soft magnetic element is arranged and configured to concentrate the current induced in the electrically conductive material and lead the current in a predetermined direction throughout the inductor unit. This way, there will be small selfgenerated losses in the inductor unit 100, 200 heating the workpieces during use.

## Claims

1. An inductor unit for controlled induction welding of at least one fiber reinforced thermoplastic composite workpiece (20, 21), comprising:
at least one coil unit (110, 210);
at least one electrically conductive element (120, 220) having a generative side (120a, 220a) and an active side (120b, 220b), wherein the active side (120b, 220b) is configured to face the at least one workpiece (20, 21) to be welded, wherein the active side (120b, 220b) of the electrically conductive element (120, 220) has a smaller cross-sectional surface area than the generative side (120a, 220a); and
at least one soft magnetic element (130, 230);
wherein the at least one coil unit (110, 210) is configured to induce currents in the electrically conductive element (120, 220); and
wherein the at least one soft magnetic element (130, 230) is arranged at least partly on the at least one electrically conductive element (120, 220) such that the induced current is directed from the generative side (120a, 220a) to the active side (120b, 220b) of the electrically conductive element (120, 220) and concentrated therein.

2. The inductor unit according to claim 1, wherein the electrically conductive element (120, 220) further comprises an end portion (140, 240) extending at least partially between the generative side (120a, 220a) and the active side (120b, 220b) of the at least one electrically conductive element (120, 220), wherein the induced current is led from the generative side (120a, 220a) to the active side (100b, 200b) of the at least one electrically conductive element (120, 220) via said end portion (140, 240).

3. The inductor unit according to any of claims 1 or 2, wherein the coil unit (110, 210) comprises at least one coil forming at least two turns, wherein the turns are wound at least partially around the generative side (120a, 220a) of the electrically conductive element (120, 220) and/or the at least one soft magnetic element (130, 230).

4. The inductor unit according to any of the preceding claims, wherein the at least one soft magnetic element (130, 230) has a relative magnetic permeability > 10, and preferably a high bulk electrical resistivity > 0.01 Ohm*m.

5. The inductor unit according to any of the preceding claims, wherein the at least one soft magnetic element (130, 230) is arranged at least partially on a boundary surface of the inductor unit (100, 200).

6. The inductor according to any of the preceding claims, wherein the inductor unit (100, 200) is in operative communication with a processing means (30) configured to generate current in the coil unit (110, 210).

7. The inductor unit according to any of the preceding claims, wherein the coil unit (110, 210) comprises at least one litz wire.

8. The inductor unit according to any of the preceding claims, wherein the electrically conductive element (120, 220) comprises copper or aluminum.

9. The inductor unit according to any of the preceding claims, wherein the soft magnetic element (130, 230) is selected from the group of: a soft magnetic ferrite, and/or a powder-based core, soft magnetic composites of bundles or stacks of individually insulated soft magnetic wires, strips or laminates, including amorphous and semi-crystalline alloys.

10. The inductor unit according to any of the preceding claims, further comprising an electrical and/or thermal insulation between the electrically conductive element (120, 220) and the at least one workpiece (20, 21) to be welded.

11. The inductor unit according to any of the preceding claims, further comprising cooling channels for fluid media.

12. The inductor unit according to any of the preceding claims, wherein at least parts of the electrically conductive element (120, 220) is exchangeable.

13. The inductor unit according to any of the preceding claims, wherein an electrically conductive element (120, 220, 160) is in contact with the at least one workpiece (20, 21) during welding, forming a closed current loop for current flowing from one area of the at least one workpiece (20, 21) to another.

14. The inductor unit according to any of the preceding claims, wherein the inductor unit (100, 200) is deformable.

15. The inductor unit according to any of the preceding claims, further comprising a mechanical clamping to maintain a consolidation pressure during welding.

16. The inductor unit according to any of the preceding claims, further comprising vibration means.

17. A system for induction welding of at least one fiber reinforced thermoplastic composite workpiece (20, 21), comprising:
an inductor unit (100, 200) according to any one of claims 1-16;
at least one workpiece (20, 21) to be welded; and
a processing means (30) which is in operative communication with the inductor unit (100, 200).

18. A method of providing a system for induction welding of at least one fiber reinforced thermoplastic composite workpiece (20, 21), comprising:
providing (310) an inductor unit (100, 200) with a coil unit (110, 210) according to any of the preceding claims;
providing at least one workpiece (20, 21) to be welded;
arranging (315) the inductor unit (100, 200) in conjunction with the at least one workpiece (20, 21); and
providing (320) a processing means (30) to be in operative communication with the inductor unit (100, 200).

## Patentansprüche

1. Induktoreinheit zum gesteuerten Induktionsschweißen zumindest eines faserverstärkten thermoplastischen Verbundwerkstücks (20, 21), aufweisend:
zumindest eine Spuleneinheit (110, 210);
zumindest ein elektrisch leitfähiges Element (120, 220) mit einer erzeugenden Seite (120a, 220a) und einer aktiven Seite (120b, 220b), wobei die aktive Seite (120b, 220b) dazu konfiguriert ist, dem zumindest einen zu schweißenden Werkstück (20, 21) zugewandt zu sein, wobei die aktive Seite (120b, 220b) des elektrisch leitfähigen Elements (120, 220) einen kleineren Querschnittsoberflächenbereich als die erzeugende Seite (120a, 220a) aufweist; und
zumindest ein weichmagnetisches Element (130, 230);
wobei die zumindest eine Spuleneinheit (110, 210) dazu konfiguriert ist, Ströme in dem elektrisch leitfähigen Element (120, 220) zu induzieren; und
wobei das zumindest eine weichmagnetische Element (130, 230) zumindest teilweise auf dem zumindest einen elektrisch leitfähigen Element (120, 220) derart angeordnet ist, dass der induzierte Strom von der erzeugenden Seite (120a, 220a) zu der aktiven Seite (120b, 220b) des elektrisch leitfähigen Elements (120, 220) gerichtet und darin konzentriert wird.

2. Induktoreinheit nach Anspruch 1, wobei das elektrisch leitfähige Element (120, 220) des Weiteren einen Endabschnitt (140, 240) aufweist, der sich zumindest teilweise zwischen der erzeugenden Seite (120a, 220a) und der aktiven Seite (120b, 220b) des zumindest einen elektrisch leitfähigen Elements (120, 220) erstreckt, wobei der induzierte Strom von der erzeugenden Seite (120a, 220a) zu der aktiven Seite (100b, 200b) des zumindest einen elektrisch leitfähigen Elements (120, 220) über den Endabschnitt (140, 240) geleitet wird.

3. Induktoreinheit nach einem der Ansprüche 1 oder 2, wobei die Spuleneinheit (110, 210) zumindest eine Spule aufweist, die zumindest zwei Windungen bildet, wobei die Windungen zumindest teilweise um die erzeugende Seite (120a, 220a) des elektrisch leitfähigen Elements (120, 220) und/oder das zumindest eine weichmagnetische Element (130, 230) gewickelt sind.

4. Induktoreinheit nach einem der vorhergehenden Ansprüche, wobei das zumindest eine weichmagnetische Element (130, 230) eine relative magnetische Permeabilität > 10 und vorzugsweise einen hohen spezifischen elektrischen Widerstand > 0.01 Ohm*m aufweist.

5. Induktoreinheit nach einem der vorhergehenden Ansprüche, wobei das zumindest eine weichmagnetische Element (130, 230) zumindest teilweise auf einer Grenzoberfläche der Induktoreinheit (100, 200) angeordnet ist.

6. Induktor nach einem der vorhergehenden Ansprüche, wobei die Induktoreinheit (100, 200) in betriebsmäßiger Kommunikation mit einem Verarbeitungsmittel (30) ist, das dazu konfiguriert ist, Strom in der Spuleneinheit (110, 210) zu erzeugen.

7. Induktoreinheit nach einem der vorhergehenden Ansprüche, wobei die Spuleneinheit (110, 210) zumindest einen Litzendraht aufweist.

8. Induktoreinheit nach einem der vorhergehenden Ansprüche, wobei das elektrisch leitfähige Element (120, 220) Kupfer oder Aluminium aufweist.

9. Induktoreinheit nach einem der vorhergehenden Ansprüche, wobei das weichmagnetische Element (130, 230) ausgewählt ist aus der Gruppe von: einem weichmagnetischen Ferrit, und/oder einem pulverbasierten Kern, weichmagnetischen Verbundwerkstoffen aus Bündeln oder Stapeln einzeln isolierter weichmagnetischer Drähte, Streifen oder Laminate, einschließlich amorpher und teilkristalliner Legierungen.

10. Induktoreinheit nach einem der vorhergehenden Ansprüche, des Weiteren aufweisend eine elektrische und/oder thermische Isolierung zwischen dem elektrisch leitfähigen Element (120, 220) und dem zumindest einen zu schweißenden Werkstück (20, 21).

11. Induktoreinheit nach einem der vorhergehenden Ansprüche, des Weiteren aufweisend Kühlkanäle für fluide Medien.

12. Induktoreinheit nach einem der vorhergehenden Ansprüche, wobei zumindest Teile des elektrisch leitfähigen Elements (120, 220) austauschbar sind.

13. Induktoreinheit nach einem der vorhergehenden Ansprüche, wobei ein elektrisch leitfähiges Element (120, 220, 160) während des Schweißens in Kontakt mit dem zumindest einen Werkstück (20, 21) ist, wodurch eine geschlossene Stromschleife für Strom gebildet wird, der von einem Bereich des zumindest einen Werkstücks (20, 21) zu einem anderen fließt.

14. Induktoreinheit nach einem der vorhergehenden Ansprüche, wobei die Induktoreinheit (100, 200) verformbar ist.

15. Induktoreinheit nach einem der vorhergehenden Ansprüche, des Weiteren aufweisend ein mechanisches Klemmen, um einen Konsolidierungsdruck während des Schweißens aufrechtzuerhalten.

16. Induktoreinheit nach einem der vorhergehenden Ansprüche, des Weiteren aufweisend Vibrationsmittel.

17. System zum Induktionsschweißen zumindest eines faserverstärkten thermoplastischen Verbundwerkstücks (20, 21), aufweisend:
eine Induktoreinheit (100, 200) nach einem der Ansprüche 1-16;
zumindest ein zu schweißendes Werkstück (20, 21); und
ein Verarbeitungsmittel (30), das in betriebsmäßiger Kommunikation mit der Induktoreinheit (100, 200) ist.

18. Verfahren zum Bereitstellen eines Systems zum Induktionsschweißen zumindest eines faserverstärkten thermoplastischen Verbundwerkstücks (20, 21), aufweisend:
Bereitstellen (310) einer Induktoreinheit (100, 200) mit einer Spuleneinheit (110, 210) nach einem der vorhergehenden Ansprüche; Bereitstellen zumindest eines zu schweißenden Werkstücks (20, 21);
Anordnen (315) der Induktoreinheit (100, 200) in Verbindung mit dem zumindest einen Werkstück (20, 21); und
Bereitstellen (320) eines Verarbeitungsmittels (30), um in betriebsmäßiger Kommunikation mit der Induktoreinheit (100, 200) zu sein.

## Revendications

1. Unité d'inducteur pour soudage par induction commandé d'au moins une pièce (20, 21) en composite thermoplastique renforcé de fibres, comprenant :
au moins une unité de bobine (110, 210) ;
au moins un élément électriquement conducteur (120, 220) ayant un côté génératif (120a, 220a) et un côté actif (120b, 220b), dans laquelle le côté actif (120b, 220b) est configuré pour faire face à ladite au moins une pièce (20, 21) à souder, dans laquelle le côté actif (120b, 220b) de l'élément électriquement conducteur (120, 220) a une surface superficielle en coupe transversale plus petite que celle du côté génératif (120a, 220a) ; et
au moins un élément magnétique tendre (130, 230) ;
dans laquelle ladite au moins une unité de bobine (110, 210) est configurée pour induire des courants dans l'élément électriquement conducteur (120, 220) ; et
dans laquelle ledit au moins un élément magnétique tendre (130, 230) est agencé au moins partiellement sur ledit au moins un élément électriquement conducteur (120, 220) de sorte que le courant induit est dirigé depuis le côté génératif (120a, 220a) vers le côté actif (120b, 220b) de l'élément électriquement conducteur (120, 220) et est concentré à l'intérieur.

2. Unité d'inducteur selon la revendication 1, dans laquelle l'élément électriquement conducteur (120, 220) comprend en outre une portion d'extrémité (140, 240) s'étendant au moins partiellement entre le côté génératif (120a, 220a) et le côté actif (120b, 220b) dudit au moins un élément électriquement conducteur (120, 220), dans laquelle le courant induit est conduit à partir du côté génératif (120a, 220a) vers le côté actif (100b, 200b) dudit au moins un élément électriquement conducteur (120, 220) via ladite portion d'extrémité (140, 240).

3. Unité d'inducteur selon l'une quelconque des revendications 1 ou 2, dans laquelle l'unité de bobine (110, 210) comprend au moins une bobine formant au moins deux spires, dans laquelle les spires sont enroulées au moins partiellement autour du côté génératif (120a, 220a) de l'élément électriquement conducteur (120, 220) et/ou dudit au moins un élément magnétique tendre (130, 230).

4. Unité d'inducteur selon l'une quelconque des revendications précédentes, dans laquelle ledit au moins un élément magnétique tendre (130, 230) présente une perméabilité magnétique relative > 10, et de préférence une résistivité électrique volumique élevée > 0,01 Ohm*m.

5. Unité d'inducteur selon l'une quelconque des revendications précédentes, dans laquelle ledit au moins un élément magnétique tendre (130, 230) est agencé au moins partiellement sur une surface limite de l'unité d'inducteur (100, 200).

6. Inducteur selon l'une quelconque des revendications précédentes, dans lequel l'unité d'inducteur (100, 200) est en communication opérationnelle avec des moyens de traitement (30) configurés pour générer un courant dans l'unité de bobine (110, 210).

7. Unité d'inducteur selon l'une quelconque des revendications précédentes, dans laquelle l'unité de bobine (110, 210) comprend au moins un fil de Litz.

8. Unité d'inducteur selon l'une quelconque des revendications précédentes, dans laquelle l'élément électriquement conducteur (120, 220) comprend du cuivre ou de l'aluminium.

9. Unité d'inducteur selon l'une quelconque des revendications précédentes, dans laquelle l'élément magnétique tendre (130, 230) est choisi parmi le groupe consistant en : une ferrite magnétique tendre, et/ou un noyau à base de poudre, des composites magnétiques tendres de faisceaux ou empilements de fils, bandes ou stratifiés magnétiques tendres isolés individuellement, y compris des alliages amorphes et semi-cristallins.

10. Unité d'inducteur selon l'une quelconque des revendications précédentes, comprenant en outre une isolation électrique et/ou thermique entre l'élément électriquement conducteur (120, 220) et ladite au moins une pièce (20, 21) à souder.

11. Unité d'inducteur selon l'une quelconque des revendications précédentes, comprenant en outre des canaux de refroidissement pour des milieux fluides.

12. Unité d'inducteur selon l'une quelconque des revendications précédentes, dans laquelle au moins des parties de l'élément électriquement conducteur (120, 220) sont interchangeables.

13. Unité d'inducteur selon l'une quelconque des revendications précédentes, dans laquelle un élément électriquement conducteur (120, 220, 160) est en contact avec ladite au moins une pièce (20, 21) pendant le soudage, formant une boucle de courant fermée pour un courant circulant d'une zone de ladite au moins une pièce (20, 21) à une autre zone.

14. Unité d'inducteur selon l'une quelconque des revendications précédentes, dans laquelle l'unité d'inducteur (100, 200) est déformable.

15. Unité d'inducteur selon l'une quelconque des revendications précédentes, comprenant en outre un serrage mécanique pour maintenir une pression de consolidation pendant le soudage.

16. Unité d'inducteur selon l'une quelconque des revendications précédentes, comprenant en outre des moyens de vibration.

17. Système de soudage par induction d'au moins une pièce (20, 21) en composite thermoplastique renforcé de fibres, comprenant :
une unité d'inducteur (100, 200) selon l'une quelconque des revendications 1 à 16 ;
au moins une pièce (20, 21) à souder ; et
des moyens de traitement (30) qui sont en communication opérationnelle avec l'unité d'inducteur (100, 200).

18. Procédé de fourniture d'un système de soudage par induction d'au moins une pièce(20, 21) en composite thermoplastique renforcé de fibres, comprenant :
la fourniture (310) d'une unité d'inducteur (100, 200) ayant une unité de bobine (110, 210) selon l'une quelconque des revendications précédentes ;
la fourniture d'au moins une pièce (20, 21) à souder ;
l'agencement (315) de l'unité d'inducteur (100, 200) conjointement avec ladite au moins une pièce (20, 21) ; et
la fourniture (320) de moyens de traitement (30) pour être en communication opérationnelle avec l'unité d'inducteur (100, 200).
